# EUROPEAN PATENT APPLICATION

(11) **EP 1 603 045 A1**
(43) Date of publication of application: **07.12.2005**
(21) Application number: 04714030.6
(22) Date of filing: 24.02.2004
(51) Int. Cl.: G06F 12/14, G06F 15/00, G06F 17/60

(54) **TERMINAL DEVICE, SERVER DEVICE, LICENSE DISTRIBUTION SYSTEM USING THE SAME**

(30) Priority: 28.02.2003 JP 2003052760
(71) Applicant: MATSUSHITA ELECTRIC INDUSTRIAL CO., LTD., Kadoma-shi, Osaka 571-8501 (JP)
(72) Inventor: NAKAHARA, Tohru, Osaka-shi, Osaka 532-0022 (JP); YAMAMOTO, Masaya, Osaka 573-1151 (JP); MIURA, Kouji, Osaka 580-0016 (JP)
(74) Representative: Pautex Schneider, Nicole Véronique
(86) International application number: PCT/JP2004/002122
(87) International publication number: WO 2004/077301

(57) **Abstract**

A terminal apparatus (300) that properly restricts use of a license in each terminal apparatus (300) includes: a license storage unit (312) that stores a license permitting use of a content which is a digital copyrighted work, in association with domain identification information indicating one of a plurality of domains; and a domain judgment unit (303) that prohibits another terminal apparatus (300) from using the license in the case where a domain to which another terminal apparatus (300) belongs and a domain indicated in the domain identification information are different; and a license processing result transmission unit (305).

## Description

### Technical Field

The present invention relates to a terminal apparatus for performing, reproduction, recording, and the like of a content which is a digital copyrighted work using a license, a server apparatus for distributing the license, and a license distribution system using these apparatuses.

### Background Art

In recent years, systems for distributing contents that are digital copyrighted works such as music, video, and game, via the Internet, digital broadcasting, or the like, have been developed, and some of which have been utilized. In addition, regarding the distribution of these contents, content use control methods for restricting the number of reproductions, transfer, duplication, and the like of the distributed contents have also been explored for the purpose of copyright protection and the like.

Conventionally, a system has been modeled in which a server distributes information including a usage rule, a content key, and the like which are necessary to use a content (hereafter the information will be referred to as "license"), and a plurality of terminal apparatuses in a network system at home (a home network) use the content using the license distributed from the server and perform reproduction and the like of the content.

Also, the license distributed from the server is held in each terminal apparatus, and then the terminal apparatus uses the content using the license held therein. When such a license is transferred between a plurality of terminal apparatuses, it is common, for the purpose of copyright protection of the content and privacy protection of a terminal apparatus owner, to prohibit the license from being transferred to any terminal apparatuses but permit it to be transferred within a certain range.

In general, it is understood that the license is restricted to be transferred between terminal apparatuses owned by a same user. In order to implement such license transfer within a certain range, it is necessary to form a group of the terminal apparatuses where the license is permitted to be transferred, and to restrict the range in which the license is able to be transferred.

For example, Japanese Laid-Open Patent application No. 2002-169726 publication discloses that a server apparatus sets one domain for a plurality of terminal apparatuses owned by the same user, generates an ID, a domain key, and the like for each domain, and distributes them to each terminal apparatus so that the same domain key is set in the terminal apparatuses belonging to the same domain.

Then, each terminal apparatus encrypts a content key with the domain key when outputting the content key to outside. As a result, such content key is able to be decrypted in the terminal apparatuses belonging to the same domain, while it is not in terminal apparatuses belonging to the different domain.

As mentioned above, in the conventional license distribution systems having a plurality of domains that are groups of terminal apparatuses, if two terminal apparatuses belong to the same domain, the license is permitted to be transferred between both terminal apparatuses and restricted not to be transferred beyond them.

However, the above-mentioned conventional terminal apparatus, server apparatus, and license distribution system have a problem that the license is able to be distributed over the domains via terminal apparatuses which belong to a plurality of domains.

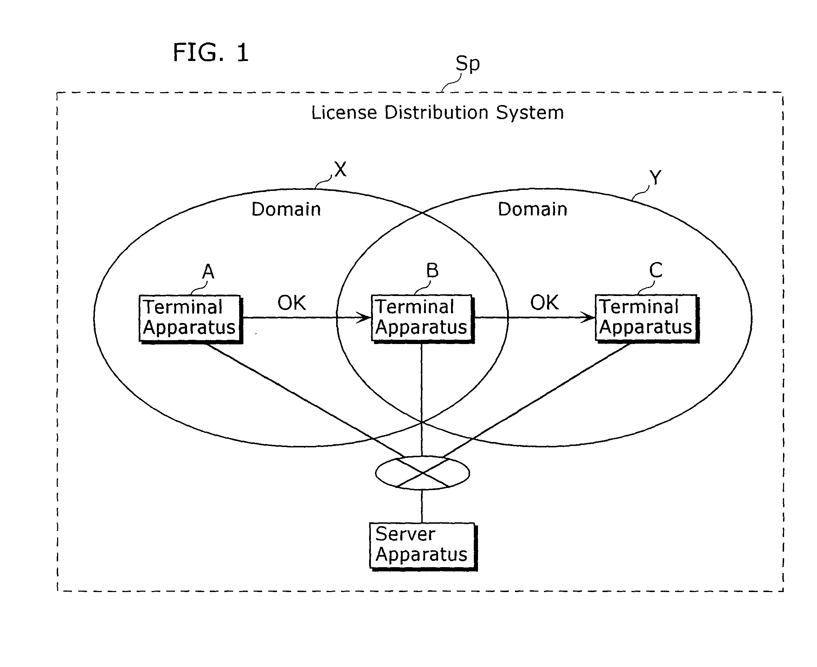

Referring now to FIG. 1, such a problem is described.

FIG. 1 is an explanatory diagram describing the problem in the conventional license distribution system and the like.

The above-mentioned conventional license distribution system Sp permits a license to be transferred between two terminal apparatuses and used in the destination terminal apparatus if both terminal apparatuses belong to the same domain. The following describes the range in which a license held in a terminal apparatus A is able to be transferred, in the case where a terminal apparatus B belongs to two domains X and Y, the terminal apparatus A belongs to a domain X, and a terminal apparatus C belongs to a domain Y.

Firstly, it is seen that the license held in the terminal apparatus A is able to be transferred to the terminal apparatus B belonging to the same domain X. It is also seen that the license held in the terminal apparatus B is able to be transferred to the terminal apparatus C belonging to the same domain Y. Then, it is apparent that the license held in the terminal apparatus A is able to be transferred to the terminal apparatus C belonging to the different domain via the terminal apparatus B. It means that if the terminal apparatuses belong to a plurality of domains, it is impossible to permit the license to be transferred between terminal apparatuses belonging to a predetermined domain and to prohibit the license from being transferred beyond the domain in order to control the license transfer within a certain range. Accordingly, that causes a problem that each terminal apparatus can freely use the license obtained from domains which the terminal apparatus does not belong to.

The present invention addresses the problem, and an object of the present invention is to provide a terminal apparatus, a server apparatus, and a license distribution system having these apparatuses for properly restricting use of a license in each terminal apparatus.

### Disclosure of Invention

The present invention accomplishes the above object by providing a terminal apparatus in a system having a plurality of domains, each of which is a group of terminal apparatuses, the terminal apparatus including: a license information storage unit operable to store license information in association with domain identification information indicating one of the plurality of domains, the license information permitting use of a content which is a digital copyrighted work; and a usage prohibition unit operable to prohibit another terminal apparatus from using the license information in the case where a domain to which the another terminal apparatus belongs is different from a domain which is indicated in the domain identification information. For example, the usage prohibition unit includes: a first domain judgment unit operable to judge whether or not the domain to which another apparatus belongs is different from the domain which is indicated in the domain identification information; and a transmission prohibition unit operable to prohibit transmission of the license information to the another terminal apparatus in the case where the first domain judgment unit judges that the domains are different. Alternatively, the usage prohibition unit is operable to cause the another terminal apparatus to judge whether or not the domain to which the another terminal apparatus belongs is different from the domain which is indicated in the domain identification information, by sending the license information and the domain identification information to the another terminal apparatus, and to prohibit the another terminal apparatus from using the license information in the case where the domains are different.

Accordingly, in the case where the domain to which another terminal apparatus belongs is different from the domain which is indicated in the domain identification information, another terminal apparatus cannot use the license so that the license use is restricted within terminal apparatuses belonging to the domain indicated in the domain identification information, which can properly restrict the license use in each terminal apparatus.

Furthermore, the terminal apparatus may include: a second domain judgment unit operable to judge whether or not the domain to which the terminal apparatus belongs is different from the domain which is indicated in the domain identification information; and a self usage prohibition unit operable to prohibit the terminal apparatus from using the content based on the license information, in the case where the second domain judgment unit judges that the domains are different.

Accordingly, in the case where the domain to which the terminal apparatus belongs is different from the domain which is indicated in the domain identification information, the terminal apparatus cannot reproduce the content based on the license information associated with the domain identification information, which can further properly restrict the license use.

Furthermore, the terminal apparatus may include an update unit operable to update the domain identification information so that the domain indicated in the domain identification information is changed.

Accordingly, since the detail of the domain identification information is updated, even when the license use is restricted for each domain, it is able to increase the convenience of the user by relaxing the restriction.

Note that the present invention may be implemented as: a method or program by which the terminal apparatus use a license; a server apparatus for distributing the license; a method by which the server apparatus distribute the license; and a license distribution system having the terminal apparatus and the server apparatus.

### Brief Description of Drawings

FIG. 1 is an explanatory diagram describing a conventional problem.
FIG. 2 is a diagram showing an overall schematic structure of a license distribution system according to the embodiment of the present invention.
FIG. 3 is a functional block diagram showing configurations of a domain management server, a license distribution server, and a terminal apparatus according to the embodiment of the present invention.
FIG. 4 is a diagram showing a table structure of a domain information storage unit according to the embodiment of the present invention.
FIGS. 5A and 5B are diagrams showing table structures of a domain judgment information storage unit according to the embodiment of the present invention.
FIG. 6 is a diagram showing a table structure of a user information storage unit according to the embodiment of the present invention.
FIG. 7 is a diagram showing a table structure of a usage rule storage unit according to the embodiment of the present invention.
FIG. 8 is a diagram showing a table structure of a content key storage unit according to the embodiment of the present invention.
FIG. 9 is a diagram showing a table structure of a license storage unit according to the embodiment of the present invention.
FIG. 10 is a diagram showing a structure of a license according to the embodiment of the present invention.
FIG. 11 is a diagram showing a structure of a communication message according to the embodiment of the present invention.
FIG. 12 is a diagram showing a structure of a domain judgment information request message body according to the embodiment of the present invention.
FIG. 13 is a diagram showing a structure of a domain judgment information transmission message body according to the embodiment of the present invention.
FIG. 14 is a diagram showing a structure of a license distribution request message body according to the embodiment of the present invention.
FIG. 15 is a diagram showing a structure of a license request message body according to the embodiment of the present invention.
FIG. 16 is a diagram showing a structure of a license search request message body according to the embodiment of the present invention.
FIG. 17 is a diagram showing a structure of a license search response message body according to the embodiment of the present invention.
FIG. 18 is a diagram showing a structure of a license obtainment request message body according to the embodiment of the present invention.
FIG. 19 is a flowchart showing processing by which a terminal apparatus obtains domain judgment information from a domain management server according to the embodiment of the present invention.
FIG. 20 is a flowchart showing processing by which a terminal apparatus obtains a license from a license distribution server according to the embodiment of the present invention.
FIG. 21 is a flowchart showing processing by which a terminal apparatus searches for a license in another terminal apparatus according to the embodiment of the present invention.
FIG. 22 is a flowchart showing processing by which a terminal apparatus obtains a license from another terminal apparatus according to the embodiment of the present invention.
FIG. 23 is a diagram showing a data structure of a license in which a domain identifier is able to be updated according to the embodiment of the present invention.
FIG. 24 is a flowchart showing processing by which a terminal apparatus obtains, from another terminal apparatus, a license in which a domain identifier is able to be updated according to the embodiment of the present invention.

### Best Mode for Carrying Out the Invention

The following describes in detail about the embodiment according to the present invention with reference to the drawings.

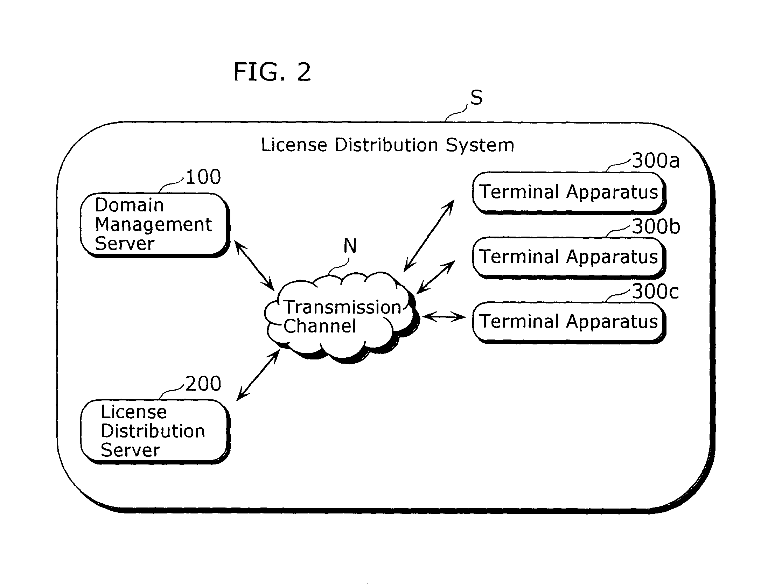

FIG. 2 is a diagram showing an overall schematic structure of a license distribution system S according to the embodiment of the present invention. The license distribution system, which is a system where server apparatuses control a range in which a license held in terminal apparatuses is able to be transferred, includes a domain management server 100 that manages a domain, a license distribution server 200 that distributes a license, terminal apparatuses 300a to 300c that hold the license therein and transfer the license therebetween, and a transmission channel N that mutually connects the servers to the apparatuses.

### (Definition of Domain)

Prior to describing in detail, the domain according to the present invention is defined.

In some data distribution service where there are terminal apparatuses that can share and transfer data therebetween, it is possible, from a logical point of view, to group these terminal apparatuses. The unit to which the grouped terminal apparatuses belong is defined as a domain. Data is not permitted to be transferred nor shared among terminal apparatuses belonging to different domains. In general, the unit to be set as a domain is decided to protect data rights of a data distribution service provider and privacy of a user. A typical example is that each domain is set for each user who is a subscriber of the data distribution service.

Note that, in the setting of domains, a single terminal apparatus may form one domain. Also, one terminal apparatus may belong to a plurality of domains. The definition of the domain has been described as above. Now, each component of the license distribution system is described below.

The domain management server 100 is a server apparatus that manages terminal apparatuses belonging to domains, generates and manages domain judgment information set for each domain, and transmits the domain judgment information to the terminal apparatuses. More specifically, the domain management server 100 manages the domains and the domain judgment information, and transmits the domain judgment information to the terminal apparatuses 300a to 300c via the transmission channel N in response to a request from any of the terminal apparatuses. Such a server apparatus is implemented by a workstation or the like.

Note that the domain judgment information is information for judging whether or not a terminal apparatus as a communication partner belongs to the same domain, when the communication is performed between these terminal apparatuses. More specifically, the information includes an encryption key of a common encryption system shared by terminal apparatuses belonging to the same domain (hereafter the key will be referred to as "domain key"), a list of information for identifying the terminal apparatuses belonging to the same domain (hereafter the list will be referred to as "domain terminal apparatus list"). A domain judgment method according to the domain judgment information is described later in detail with reference to the drawings.

Also note that, when data such as the domain judgment information that should be securely managed is sent and received between the domain management server 100 and one of the terminal apparatuses 300a to 300c via the transmission channel N, such data transfer should be performed after a Secure Authenticated Channel (hereafter referred to as "SAC") has been established therebetween to ensure the security. The establishment of the SAC can be implemented, for example, by a Secure Socket Layer (SSL) and a Transport Layer Security (TLS).

The license distribution server 200 is a server apparatus that manages usage rules of a content owned by a user, and authorizes a license of the content to the user. More specifically, the license distribution server 200 manages usage rules of a content for each user or for each of the terminal apparatuses 300a to 300c, then generates a license in response to a request from the user, and distributes the license to the terminal apparatuses 300a to 300c via the transmission channel N. Alternatively, in a push type distribution format such as digital broadcasting and broadband broadcasting, it is also possible to permit the use of a content by distributing a temporally revoked license together with the content and by validating the license through a billing process at the terminal apparatuses 300a to 300c.

Note that the license is data that includes a decryption key (hereafter referred to as "content key") for decrypting an encrypted content and information relating to control of content use and transfer. When the license is sent and received between the license distribution server 200 and one of the terminal apparatuses 300a to 300c via the transmission channel N, such data transfer should be performed after the establishment of the SAC. A data structure of the license is described later in detail with reference to the drawings.

The transmission channel N is a network that connects the domain management server 100, the license distribution server 200, and the terminal apparatuses 300a to 300c to one another. For example, the transmission channel N is a communication network such as the Internet, digital broadcasting, or a network combining such networks.

The terminal apparatuses 300a to 300c, which have a function for connecting them to the transmission channel N, are used by the user to use a content or transfer the license therebetween. For example, the terminal apparatuses 300a to 300c are apparatuses by which the user uses the data such as a content using a monitor display and the like according to the license. Such examples are content display apparatuses and recorders such as a Set-Top Box (STB) for receiving digital broadcasting, a digital TV, a Digital Versatile Disc (DVD) recorder, a Hard Disk Drive (HDD) recorder and a Personal Computer (PC), or complex apparatuses combining these apparatuses and recorders.

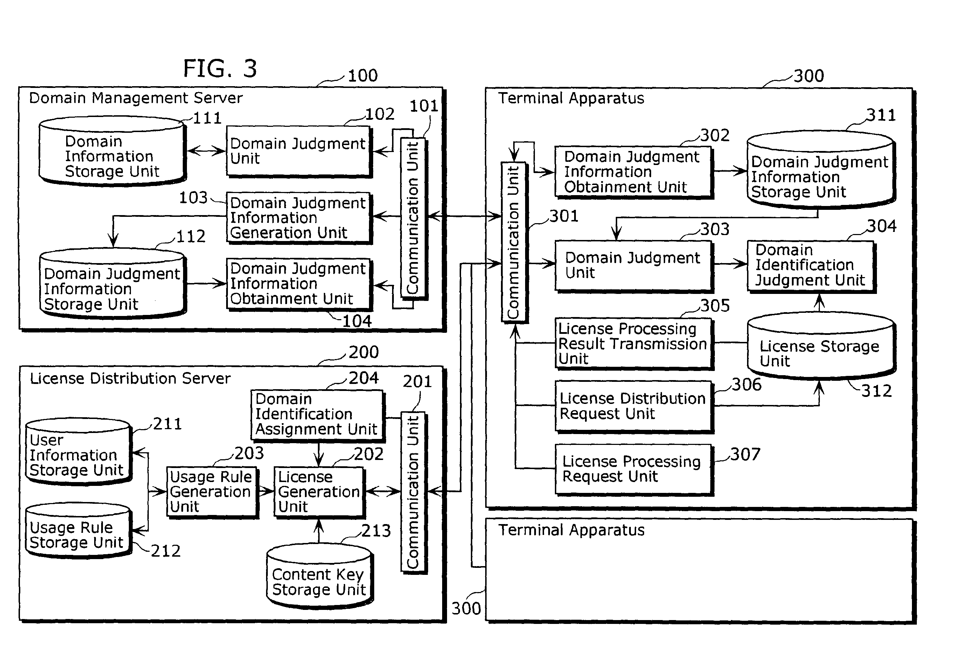

The license distribution system S performs processing with the above structure by which the terminal apparatuses 300a to 300c obtain a license and finally transfer the license therebetween, as described in detail below with reference to FIGS. 3 to 22 in the present embodiment.

### (Definition of Identifiers)

Now, identifiers according to the present embodiment are defined.

A domain identifier refers to information for uniquely identifying a domain in the license distribution system S.

A user identifier refers to information for uniquely identifying a user in the license distribution system S.

A terminal identifier refers to information for uniquely identifying a terminal apparatus in the license distribution system S. In the present embodiment, a terminal identifier of each terminal apparatus 300 is indicated as "TERMINAL-ID-0001". It is assumed that the terminal identifier has been stored in a ROM in each terminal apparatus 300.

A license identifier refers to information for uniquely identifying a license in each terminal apparatus 300. The license is able to be uniquely identified in the license distribution system S by combining the terminal and license identifiers.

Other identifiers and the specific values of identifiers are defined and described later when appropriate and necessary. The definition of each identifier has already been described.

FIG. 3 is a functional block diagram showing detailed configurations of the domain management server 100, the license distribution server 200, and each terminal apparatus 300 shown in FIG. 2. In FIG. 3, a terminal apparatus 300 illustrates a functional configuration of the terminal apparatuses 300a to 300c that are represented by the terminal apparatus 300a.

Firstly, a detailed configuration of the domain management server 100 is described. The domain management server 100 includes: a domain information storage unit 111 that stores domain information; a domain judgment information storage unit 112 that stores domain judgment information; a communication unit 101 that communicates with the terminal apparatus 300; a domain judgment unit 102 that judges a domain to which the terminal apparatus 300 belongs; a domain judgment information generation unit 103 that generates domain judgment information; and a domain judgment information obtainment unit 104 that obtains domain judgment information from the domain judgment information storage unit 112.

Next, a detailed configuration of the license distribution server 200 is described. The license distribution server 200 includes: a user information storage unit 211 that stores user information; a usage rule storage unit 212 that stores usage rules; a content key storage unit 213 that stores a content key; a communication unit 201 that communicates with the terminal apparatus 300; a license generation unit 202 that generates a license from usage rules, a domain identifier, and a content key; a usage rule generation unit 203 that generates usage rules; and a domain identification assignment unit 204 that sets a domain identifier to be assigned to a license.

Finally, a detailed configuration of the terminal apparatus 300 is described. The terminal apparatus 300 includes: a domain judgment information storage unit 311 that stores domain judgment information obtained from the domain management server 100; a license storage unit 312 that stores a license from the license distribution server 200 and another terminal apparatus 300; a communication unit 301 that communicates with the domain management server 100, the license distribution server 200, and another terminal apparatus 300; a domain judgment information obtainment unit 302 that generates a message requesting domain judgment information and requests the domain management server 100 for domain judgment information; a domain judgment unit 303 that judges based on domain judgment information whether or not another terminal apparatus 300 as a communication partner belongs to the same domain; a domain identification judgment unit 304 that judges based on a domain identifier included in a license whether or not the license is able to be processed in a domain to which this terminal apparatus 300 belongs; a license distribution request unit 306 that generates a message requesting license distribution and requests the license distribution server 200 to distribute a license; a license processing request unit 307 that generates a message requesting license processing such as retrieving and providing a license and requests another terminal apparatus 300 to process the license; and a license processing result transmission unit 305 that sends to another terminal apparatus 300 a response with results of a license processing request received from such terminal apparatus 300.

The above has already described the detailed configurations of the domain management server 100, the license distribution server 200, and the terminal apparatus 300. Note that each server and terminal apparatus includes data storage units and processing units. Each data storage unit is implemented by a storage medium such as HDD, and each processing unit is implemented by a program or the like to be executed, using hardware such as LSI, or CPU, RAM, ROM, and the like. In the terminal apparatus 300, each storage unit and processing unit is preferably tamper-resistant as hardware or software.

Now, data and data structures used in the present embodiment are described. A description is given firstly for data structures held in each storage unit in the domain management server 100, the license distribution sever 200, and the terminal apparatus 300 respectively, and finally for a license and structure of the license which is distributed from the license distribution server 200 to the terminal apparatus 300 and able to be transferred to another terminal apparatus in the present embodiment.

### (Data Held in Each Storage Unit in Domain Management Server 100)

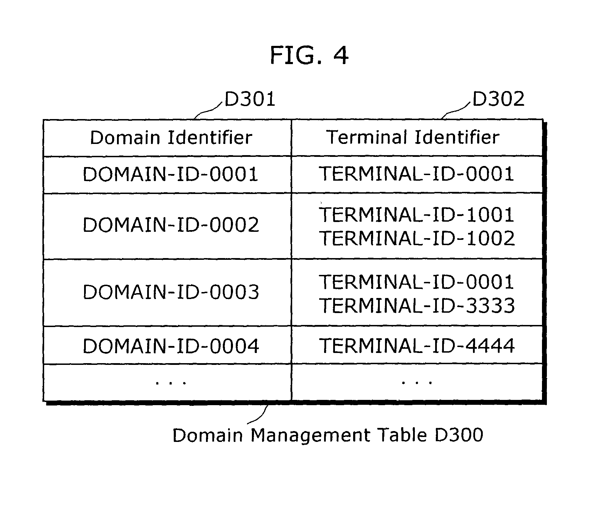

Firstly, data held in each storage unit in the domain management server 100 is described with reference to the drawings. The domain information storage unit 111 is a database that includes a domain management table for managing information about domains, and is used to associate a domain with a terminal apparatus 300 belonging to the domain. More specifically, the domain information storage unit 111 includes a domain management table D300 shown in FIG. 4 where manages domain identifiers D301 and terminal identifiers D302.

FIG. 4, for example, shows that a domain with a domain identifier D301 "DOMAIN-ID-0001" has a terminal apparatus 300 with a terminal identifier D302 "TERMINAL-ID-0001". It also shows that a domain with a domain identifier D301 "DOMAIN-ID-0002" has two terminal apparatuses 300 with terminal identifiers "TERMINAL-ID-1001" and "TERMINAL-ID-1002".

It further shows that a domain "DOMAIN-ID-0003" has two terminal apparatuses 300 "TERMINAL-ID-0001" and "TERMINAL-ID-3333". Accordingly, it is seen that a terminal apparatus 300 with the terminal identifier D302 "TERMINAL-ID-0001" belongs to the domains with domain identifiers "DOMAIN-ID-0001" and "DOMAIN-ID-0003".

The domain judgment information storage unit 112 is a database that manages domain judgment information for judging whether or not a terminal apparatus 300 as a communication partner belongs to the same domain. When the domain judgment information is transferred in response to a request from the terminal apparatus 300 for the domain judgment information, the domain judgment information storage unit 112 is used to obtain the domain judgment information of a domain corresponding to a terminal identifier included in the request for the domain judgment information.

More specific descriptions are given below for the domain judgment information storage unit 112 in the case where the domain judgment information is a domain key and a domain terminal apparatus list, respectively.

First, the domain judgment information storage unit 112 in the case where the domain judgment information is a domain key is described below.

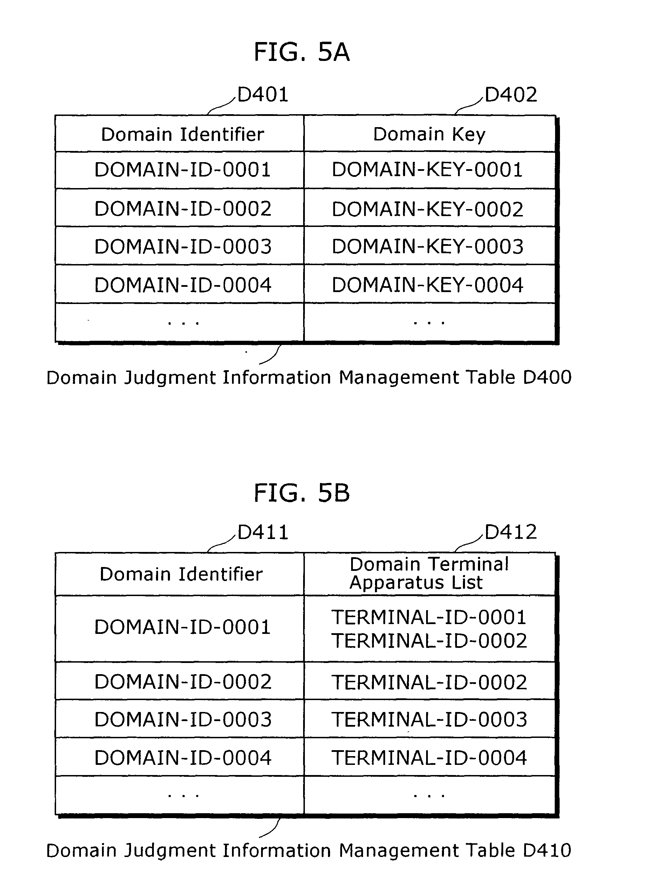

In such a case, the domain judgment information storage unit 112 includes a domain judgment information management table D400 shown in FIG. 5A which manages domain identifiers D401 and domain keys D402. For example, a domain key "DOMAIN-KEY-0001" is shown as domain judgment information to be transferred to a terminal apparatus 300 belonging to a domain with a domain identifier D401 "DOMAIN-ID-0001".

Secondly, the domain judgment information storage unit 112 in the case where the domain judgment information is a domain terminal apparatus list is described. In such a case, the domain judgment information storage unit 112 includes a domain judgment information management table D410 shown in FIG. 5B which manages domain identifiers D411 and domain terminal apparatus lists D412. For example, it is shown that domain judgment information to be transferred to a terminal apparatus 300 belonging to a domain with a domain identifier D401 "DOMAIN-ID-0001" is a domain terminal apparatus list with terminal identifiers "TERMINAL-ID-0001" and "TERMINAL-ID-0002".

In order to register data into the domain information storage unit 111 and the domain judgment information storage unit 112, a user of a terminal apparatus 300 accesses, via the communication channel N, a Website of a provider managing domains, and registers data of the terminal apparatus 300 online from a domain registration window. The user may also register the data offline, for example, by using a domain registration postcard.

In the domain registration processing, if one domain is set for one user, at the beginning the provider assigns a domain identifier D301 to the user, and at the same time a domain judgment information generation unit 103 generates domain judgment information corresponding to the assigned domain identifier D301, then a domain identifier D401 and a domain key D402 are associated each other and registered into the domain judgment information management table D400 in the domain judgment information storage 112.

Then, a terminal identifier D302 of the terminal apparatus 300 is notified online or offline to the provider, and then the domain identifier D301 and the terminal identifier D302 are associated each other and registered into the domain management table D300 in the domain information storage unit 111 through a domain judgment unit 102. This domain registration processing creates the domain management table D300 in the domain information storage unit 111

In order to add a terminal apparatus 300 to a domain, the user accesses a Website of the provider in the same manner at that described above, and inputs, on a terminal apparatus adding window, a domain identifier of the above domain and a terminal identifier of the above terminal apparatus 300 so that the terminal identifier is added through the domain judgment unit 102 to terminal identifiers D302 corresponding to the domain identifier D301 in the domain management table D300 in the domain information storage unit 111.

The above has described how the data are registered into the domain judgment information storage unit 112 in the case where the domain judgment information is a domain key. Such data registration is also applicable to the case where the domain judgment information is a domain terminal apparatus list.

### (Data Held in Each Storage Unit in License Distribution Server 200)

Next, data held in each storage unit in the license distribution server 200 is described with reference to the drawings.

The user information storage unit 211 is a database that includes a user information management table for managing information about users, and is used to associate a terminal apparatus 300 accessing the license distribution server 200 with a user having content usage rules managed in the usage rule storage unit 212.

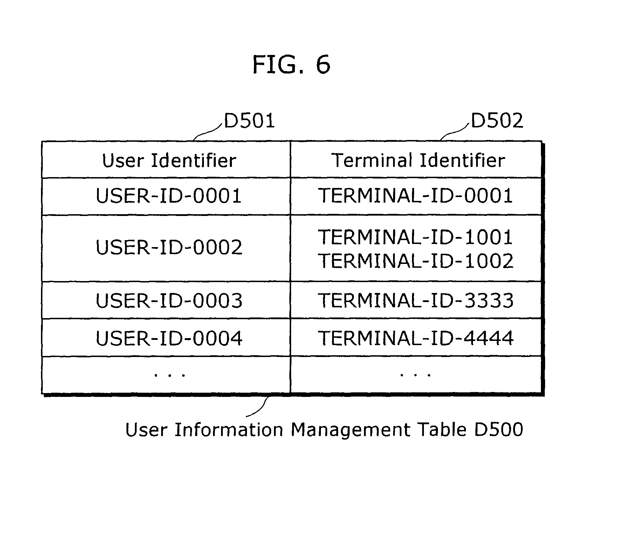

More specifically, the user information storage unit 211 includes a user information management table D500 shown in FIG. 6 where manages user identifiers D501 and terminal identifiers D502. For example, FIG. 6 shows that a user with a user identifier D501 "USER-ID-0001" has a terminal apparatus 300 with a terminal identifier D502 "TERMINAL-ID-0001". It also shows that a user with a user identifier D501 "USER-ID-0002" has two terminal apparatuses 300 with terminal identifiers D502 "TERMINAL-ID-1001" and "TERMINAL-ID-1002". Accordingly, it is seen that the user can access the license distribution server 200 from both terminal apparatuses 300.

Data registration into the user information storage unit 211 is performed when the user registers oneself as a user to receive a service provided by a service provider operating a content distribution service. In order to register the user data into the user information storage unit 211, the user accesses, via the communication channel N, a Website of the provider supplying the content distribution service, and registers the user data online from a user registration window. The user may also register the data offline, for example, by using a user registration postcard.

In the user registration processing, at the beginning the service provider assigns a user identifier D501 to the user, and a terminal identifier D502 of the user's terminal apparatus 300 is notified to the service provider online or offline, then the user identifier D501 and the terminal identifier D502 are associated each other and registered into the user information management table D500 in the user information storage unit 211. This user registration processing creates the user information management table D500 in the user information storage unit 211.

The usage rule storage unit 212 is a database that manages content usage rules for each user, and is used when a determination is made whether or not usage rules that the user has are permitted to be provided to the terminal apparatus 300, in response to a request from the terminal apparatus 300 for license distribution, and when such usage rules are generated if permitted.

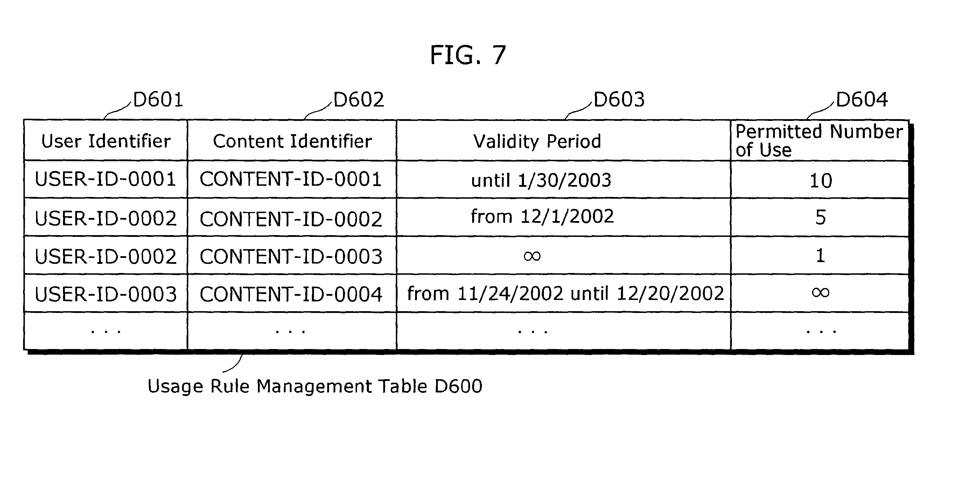

More specifically, as shown in FIG. 7, the usage rule storage unit 212 includes a usage rule management table D600 including: user identifiers D601 that indicate owners of usage rules; content identifiers D602 that indicate contents permitted to be used under usage rules; validity periods D603 that indicate to effective and expiring dates of validity for contents with content identifiers D602; permitted number of uses D604 that indicate how many times contents with content identifiers D602 are permitted to be used. For example, the usage rule management table D600 shows that a user with a user identifier D601 "USER-ID-0003" is permitted to use a content with a content identifier D602 "CONTENT-ID-0004" for a validity period D603 of "11/24/2002 to 12/20/2002" for an unlimited number of times (∞) as a permitted number of uses D604, or for any desired times.

In order to register data into the usage rule storage unit 212, the user purchases rights to use a content from a service provider operating a content distribution service. In the purchase processing, the user accesses a Website of the service provider via the communication channel N, and purchases the rights online from a content purchase window. The user may also purchase the rights offline, for example, by using a purchase postcard.

In the purchase processing, at the beginning the user identifies a content identifier D602 of a content to be purchased, confirms usage rules of the content, and then performs the purchase processing. Then, the user identifier D601 of the user who has performed the purchase processing and the content identifier D602 are associated each other and registered into the usage rule management table D600 in the usage rule storage unit 212. This purchase processing creates the usage rule management table D600 in the usage rule storage unit 212.

The content key storage unit 213 is a database that manages content keys for decrypting encrypted contents. When a license is generated in response to a request from the terminal apparatus 300 for providing the license, the content key storage unit 213 is used to obtain a content key corresponding to a content identifier included in the request for providing the license.

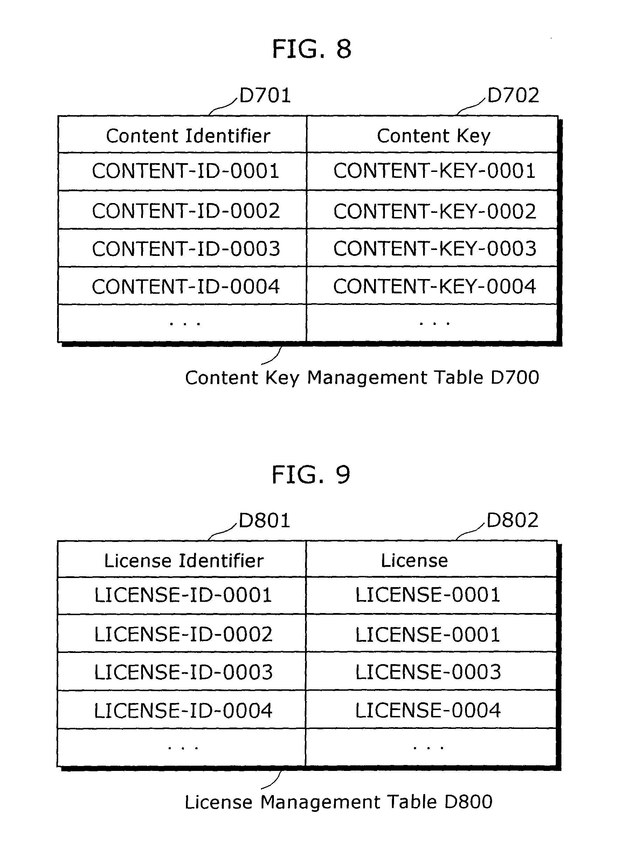

More specifically, as shown in FIG. 8, the content key storage unit 213 includes a content key management table D700 that includes content identifiers D701 for uniquely identifying contents in the license distribution system and content keys D702 corresponding to the content identifiers D701. For example, the content key management table D700 shows that a content key D702 for decrypting an encrypted content with a content identifier D701 "CONTENT-ID-0001" is "CONTENT-KEY-0001".

In the case where one domain is set for a group of terminal apparatuses owned by the same user, the domain information storage unit 111 in the domain management server 100 and the user information storage unit 211 in the license distribution server 200 may share the above data registration processing in cooperation with each other.

### (Data Held in Each Storage Unit in Terminal Apparatus 300)

Next, data held in each storage unit in the terminal apparatus 300 is described with reference to the drawings.

The domain judgment information storage unit 311 is a database that manages domain judgment information, and is used to obtain the domain judgment information in order to judge whether or not a terminal apparatus 300 as a communication partner belongs to the same domain. For further details, refer to the description for the domain judgment information storage unit 112.

The license storage unit 312 is a database that manages licenses and is used to obtain a license corresponding to a content identifier, when a content is used in the terminal apparatuses 300 or when the license is transmitted to another terminal apparatus 300. More specifically, as shown in FIG. 9, the license storage unit 312 includes a license management table D800 including license identifiers D801 and licenses D802 corresponding to the license identifiers D801. For example, the license management table D800 shows that a license with a license identifier D801 "LICENSE-ID-0001" is "LICENSE-0001".

In order to register data into the license storage unit 312, the terminal apparatus 300 obtains a license from the license distribution server 200 or another terminal apparatus 300.

The present embodiment lastly describes a license held in the license storage unit 312 and data structure of the license. Note that the license is one of the data items used in a content distribution system. The content distribution system is described briefly herein.

The content distribution system is a system for distributing contents from server apparatuses to terminal apparatuses via communication such as the Internet, digital broadcasting, or the like, and for permitting the terminal apparatuses to use the contents. In the content distribution system, copyright protection technologies are used to protect copyrights of the contents and to prevent unauthorized use of the contents by malicious users and the like.

More specifically, by using cryptographic technology or the like, the copyright protection technologies securely control content use by users such as reproduction of the contents or copying of the contents to recording media. For example, one of such technologies is a system in which a server apparatus generates a license including usage rules such as permitted number of content uses in a terminal apparatus and a content key for decrypting an encrypted content, and distributes the license to the terminal apparatus, and then the terminal apparatus decrypts the encrypted content that has been obtained separately, with a content key included in the above license so that the system controls the content use with the usage rules.

In general, a content key and a license are assigned for each content in association with a content identifier. In the description, the content identifier is information for uniquely identifying the content in the content distribution system. The present embodiment assumes that the licenses are assigned for respective contents.

The above has already described the content distribution system and the license.

### (Data Structure of License)

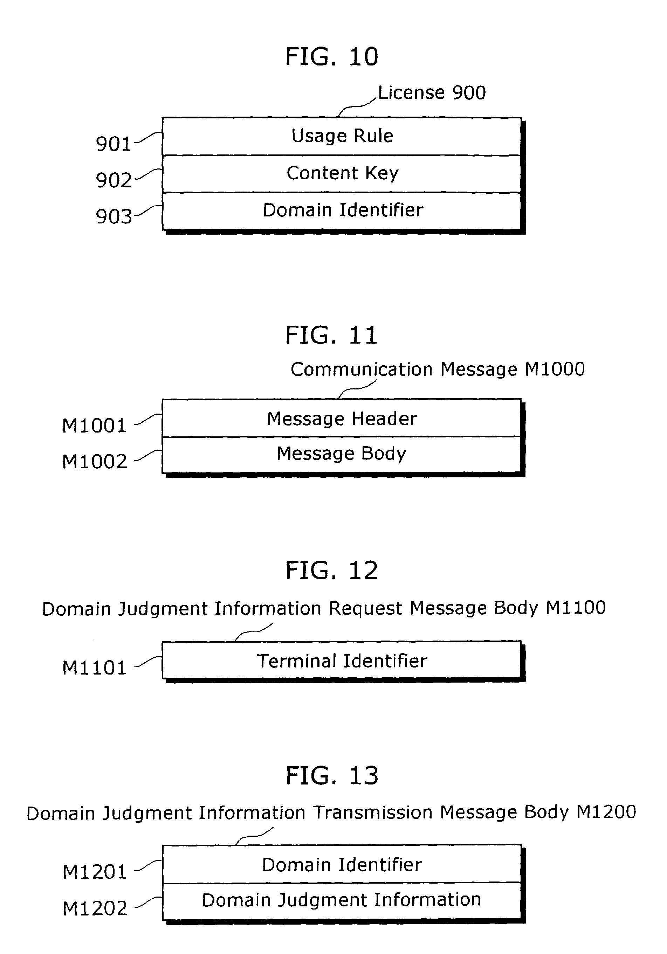

Finally, referring to FIG. 10, data structure of the license is described. A license 900 includes: a usage rule 901 that includes information permitting use of a content; a content key 902 for decrypting an encrypted content corresponding to the license 900; and a domain identifier 903 that identifies a domain in which use and transfer of the license 900 are permitted. The usage rule 901 includes permitted number of uses, for example "for ten times", a validity period, for example "from December 1, 2002 until February 13, 2003", and the like for the content corresponding to the license 900.

It is necessary to associate the license 900 with the content identifier in the license storage unit 312 during the processing related to the license. Alternatively, the license may include the content identifier beforehand in order to avoid the processing for associating the license 900 in the terminal apparatus 300 with the content identifier. The above has described the structure of the license.

The structures of data used in the present embodiment have already been described.

Now, processing in the license distribution system S by which the terminal apparatus 300 finally transfers a license to another terminal apparatus belonging to the same domain is described herein below.

The above processing needs: processing for obtaining a license to be transferred; processing for obtaining domain judgment information for judging a domain in order to transfer the license in the present invention; further processing that would be necessary in some situations to search for a terminal apparatus holding the desired license, prior to transferring the license; and finally, processing for requesting the terminal apparatus holding the desired license for the license after the search.

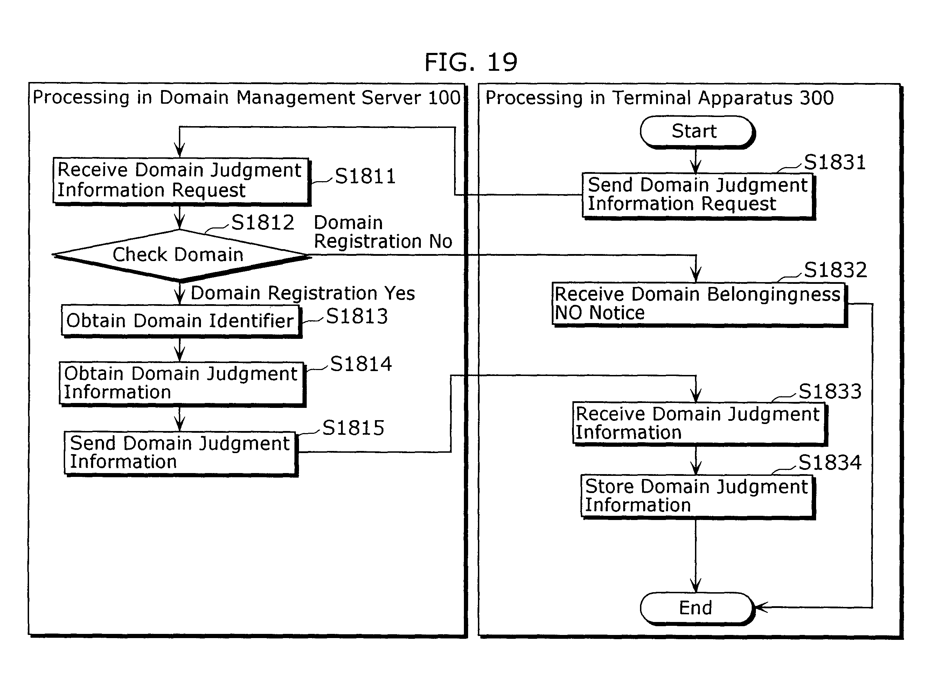

Therefore, the following describes how the terminal apparatus 300, in the license distribution system S with the structure described above, performs: processing for obtaining the domain judgment information from the domain management server 100; processing for obtaining a license from the license distribution server 200; processing for retrieving the license from other terminal apparatuses 300; and processing for requesting another terminal apparatus for the license, respectively with reference to FIGS. 19 to 22.

Prior to describing the above processing performed by each unit, a communication message used in the present embodiment is described herein below.

FIG. 11 is a diagram showing details of a message format of a communication message M1000 that is transferred between the domain management server 100, the license distribution server 200, and the terminal apparatus 300. The communication message M1000 in FIG. 11 includes a message header M1001 and a message body M1002.

The message header M1001 includes at least information for identifying a destination of the communication message and information for identifying a source of the message. The information for identifying the destination is referred to as an address of the message, and the information for identifying the source is referred to as an address of a response message when the response message is sent in response to the received message. An IP address is a typical example of the information for identifying the source and the destination. Furthermore, the message header may include information necessary for authentication processing in the case where the authentication processing is performed between a server apparatus and a terminal apparatus that send and receive the communication message. The message body includes specific information of each message. The specific information of each message body is described later for each message.

### (Domain Judgment Information Obtainment Processing)

Prior to describing domain judgment information obtainment processing, data structures of communication messages related to the domain judgment information obtainment processing are described herein with reference to FIGS. 12 and 13. A domain judgment information request message body M1100 in FIG. 12 includes a terminal identifier M1101. A domain judgment information transmission message body M1200 in FIG. 13 includes a domain identifier M1201 and domain judgment information M1202. The data structures of communication messages related to the domain judgment information obtainment processing have been described above.

Referring now to FIG. 19, the following describes how, in the processing performed by each unit, the terminal apparatus 300 consequently obtains domain judgment information from the domain management server 100.

FIG. 19 is a flowchart showing processing by which the terminal apparatus 300 according to the embodiment of the present invention obtains the domain judgment information from the domain management server 100.

The terminal apparatus 300 starts the processing for obtaining the domain judgment information by instructing a terminal application of a user to obtain the domain judgment information. The terminal application that has received the domain judgment information obtainment instruction gives a domain judgment information obtainment instruction to the domain judgment information obtainment unit 302. The domain judgment information obtainment unit 302 generates a domain judgment information request message (the communication message M1000 including the domain judgment information request message body M1100 as the message body M1002), and sends the message to the domain management server 100 via the communication unit 301 (Step S1831). At this stage, the terminal identifier M1101 included in the domain judgment information request message body M1100 is set as a terminal identifier obtained from a ROM in the terminal apparatus 300. The following description assumes that "TERMINAL-ID-0001" is set as the terminal identifier.

The domain management server 100 receives the above domain judgment information request message via the communication unit 101 (Step S1811). The domain judgment unit 102 extracts the terminal identifier M1101 from the domain judgment information request message body M1100, searches for the terminal identifier M1101 in the domain management table D300 of the domain information storage unit 111, and checks whether or not the terminal apparatus 300 is registered in the domain (Step S1812).

If the terminal identifier M1101 does not exist in the domain management table D300 as a result of the search, then the domain judgment unit 102 sends via the communication unit 101 a response message with a message body indicating that such a terminal identifier does not belong to the domain. The terminal apparatus 300 receives the response message (Step 1832), notifies the user of the message, and ends the processing (FIG. 19: End).

If the terminal identifier M1101 exists in the domain management table D300 as a result of the search, then the domain judgment unit 102 identifies a domain identifier D301 of the domain to which the terminal apparatus 300 belongs, and obtains the domain identifier D301 (Step S1813).

Note that, in the case where the terminal apparatus 300 belongs to a plurality of domains, a plurality of domain identifiers are hit as a result of the search. In this case, it is possible that the domain judgment information transmission message that includes a list of pairs of domain judgment information and domain identifiers that is sent after performing the subsequent processing for each domain identifier, and it is also possible that the subsequent processing is performed after a response message including a plurality of domain identifiers that are hit for the terminal apparatus 300 is sent and a user selects one domain identifier from them.

In the case where the domain judgment information is a domain key, the subsequent processing is described below.

The domain judgment information obtainment unit 104 searches for the domain identifier D301 in the domain judgment information management table D400 of the domain judgment information storage unit 112, identifies a domain key D402 that is the domain judgment information of the domain corresponding to the domain identifier D301, and obtains the domain key D402 (Step S1814).

The domain judgment information obtainment unit 104 adds a message header to the domain identifier D301 and the domain key D402 obtained above in order to generate a domain judgment information transmission message (the communication message M1000 including the domain judgment information transmission message body M1200 as the message body M1002), and sends the message to the terminal apparatus 300 via the communication unit 101 (Step S1815).

The terminal apparatus 300 receives the domain judgment information transmission message via the communication unit 301 (Step S1833), extracts the domain identifier D301 and the domain key D402 from the message, stores them into the domain judgment information storage unit 311 in association with each other (Step S1834), and ends the processing.

Alternatively, in the case where the domain judgment information is a domain terminal apparatus list, the subsequent processing is described below.

The domain judgment information obtainment unit 104 searches for the domain identifier D301 in a domain judgment information management table D410 of the domain judgment information storage unit 112, identifies a domain terminal apparatus list D412 that is the domain judgment information of the domain corresponding to the domain identifier D301, and obtains the domain terminal apparatus list D412 (Step S1814).

The domain judgment information obtainment unit 104 adds a message header to the domain identifier D301 and the domain terminal apparatus list D412 obtained above in order to generate a domain judgment information transmission message, and sends the message to the terminal apparatus 300 via the communication unit 101 (Step S1815).

The terminal apparatus 300 receives the above domain judgment information transmission message via the communication unit 301 (Step S1833), extracts the domain identifier D301 and the domain terminal apparatus list D412 from the message, stores them into the domain judgment information storage unit 311 in association with each other (Step S1834), and ends the processing.

The above has already described how the user gives the instruction to obtain the domain judgment information, and consequently the terminal apparatus 300 obtains the domain judgment information from the domain management server 100.

### (License Distribution Request and Obtainment Processing)

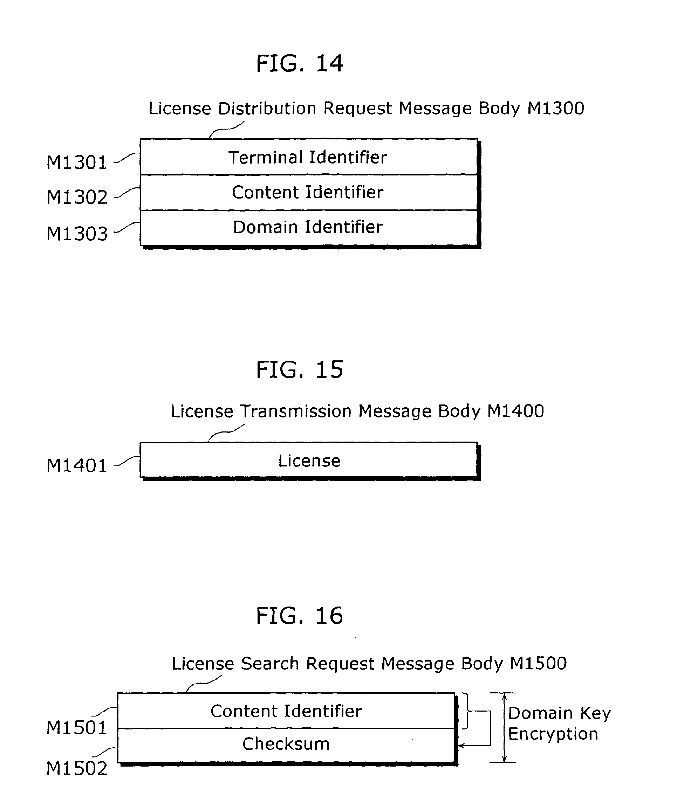

Prior to describing, with reference to FIGS. 14 and 15, how license distribution is requested and the license is consequently obtained, data structures of communication messages related to the license distribution request and obtainment processing is described herein below. The license distribution request message body M1300 in FIG. 14 includes a terminal identifier M1301, a content identifier M1302, and a domain identifier M1303. A license transmission message body M1400 in FIG. 15 includes a license M1401. The data structures of communication messages related to license distribution request and obtainment processing have already been described.

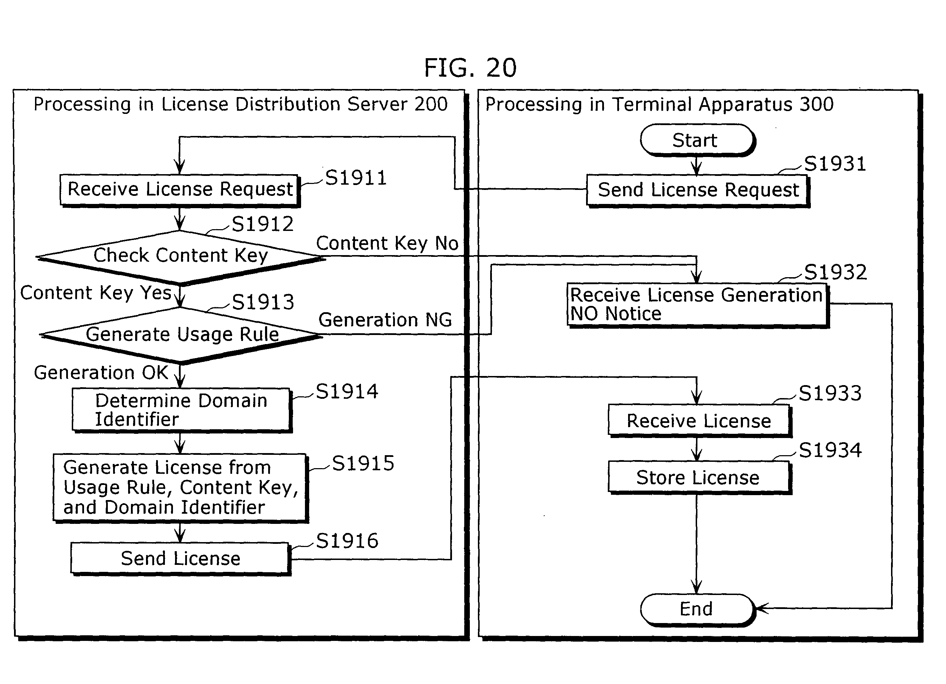

Referring now to FIG. 20, the following describes how, in the processing performed by each unit, the terminal apparatus 300 consequently obtains a license from the license distribution server 200.

FIG. 20 is a flowchart showing processing by which the terminal apparatus 300 according to the embodiment of the present invention consequently obtains a license from the license distribution server 200.

The terminal apparatus 300 starts the license obtainment processing in response to the user's input of information into an application in the terminal apparatus 300 and a license obtainment instruction. The user is required to input into the application in the terminal apparatus 300 at least: a content identifier that is one of information for identifying a license to be obtained, or information equivalent to the content identifier; and a domain identifier that is one of information for identifying a domain where the license to be obtained is permitted to be used and transferred, or information equivalent to the domain identifier. The following description assumes that the user has already started the license obtainment processing by inputting a content identifier "CONTENT-ID-0001" and a domain identifier "DOMAIN-ID-0001".

The terminal apparatus 300 that has received the information input from the user generates a license distribution request message (the communication message M1000 including the license distribution request message body M1300 as the message body M1002) in the license distribution request unit 306, and sends the message to the license distribution server 200 via the communication unit 301 (Step S1931).

The terminal identifier M1301 included in the license distribution request message body M1300 is set as "TERMINAL-ID-0001" that is a terminal identifier of the terminal apparatus 300 sending the license distribution request message. The content identifier M1302 is set as "CONTENT-ID-0001" that is the content identifier inputted by the user. The domain identifier M1303 is set as "DOMAIN-ID-0001" that is the domain identifier inputted by the user.

The license distribution server 200 receives the license distribution request message via the communication unit 201 (Step S1911). The license generation unit 202 extracts the content identifier M1302 from the license distribution request message body M1300, and checks whether or not a content key corresponding to the content identifier M1302 exists in the content key storage unit 213 (Step S1912).

If such a content key does not exist in the content key storage unit 213, then the license distribution server 200 cannot generate a license and ends the processing, and subsequently the license distribution server 200 sends to the terminal apparatus 300 a response message with a message body indicating that such a content key does not exists, that is, the content identifier is unauthorized.

If the content key exists in the content key storage unit 213, then the license generation unit 202 obtains the content key and performs the subsequent processing. Note that the following description assumes that in the present embodiment there is a content key "CONTENT-KEY-0001" corresponding to the content identifier "CONTENT-ID-0001" as shown in FIG. 8.

The usage rule generation unit 203 extracts the terminal identifier M1301 from the license distribution request message body M1300, and identifies, from the user information management table D500 held in the user information storage unit 211, a user identifier D501 corresponding to the terminal identifier M1301, using the terminal identifier M1301 as a key. If such a terminal identifier M1301 does not exist in the user information management table D500, then the usage rule generation unit 203 determines that the terminal apparatus 300 which has sent the license distribution request message is not subscribed in the content distribution service. In this case, since the usage rule generation unit 203 cannot generate a usage rule, the usage rule generation unit 203 ends the processing and sends to the terminal apparatus 300 a response message with a message body indicating that such a terminal identifier does not exist in the user information management table D500.

If the user identifier D501 exists in the user information management table D500, then the usage rule generation unit 203 obtains the user identifier D501 and performs the subsequent processing. The following description assumes that in the present embodiment there is a user identifier "USER-ID-0001" corresponding to the terminal identifier "TERMINAL-ID-0001" as shown in FIG. 6.

The usage rule generation unit 203 identifies, from the usage rule management table D600 held in the usage rule storage unit 212, a usage rule to be generated according to the content identifier M1302 extracted from the user identifier D501 and the license distribution request message body M1300. More specifically, the usage rule generation unit 203 identifies, in the usage rule management table D600, a record in which the user identifier D601 matches the user identifier D501 and the content identifier D602 matches the content identifier M1302.

If such a record does not exist, then the usage rule generation unit 203 sends to the terminal apparatus 300 a response message indicating that such a usage rule does not exist.

If the record exists, then the usage rule generation unit 203 generates a usage rule to be distributed according to the stored usage rules (Step S1913). Generation methods in this case include methods for generating all usage rules indicated in the record, for generating a part of usage rules indicated in the record, or the like.

Here are examples of the generation methods. Usage rules that are indicated in a record identified by a user identifier "USER-ID-0001" and a content identifier "CONTENT-ID-0001" are a validity period "until 1/30/2003" and a permitted number of uses "for ten times". In the case where all usage rules are distributed, the usage rule generation unit 203 generates a usage rule where the permitted number of uses, which is changeable, is set as "for ten times", and changes the permitted number of uses of the already generated record to "for zero times".

On the other hand, in the case where the user's rights are partly distributed, the usage rule generation unit 203 makes the terminal apparatus 300 notify the unit 203 the number of uses desired by the user (for example, for three times), generates a usage rule where the permitted number of uses, which is changeable, is set as "for three times", and changes the permitted number of uses of the already generated record to "for seven times". If the usage rule has already been set as "for one time" in operation, the usage rule generation unit 203 generates a usage rule where the permitted number of uses is set as "for one time", and changes the permitted number of uses of the already generated record to "for nine times". Although the various operations are possible as above, they are not vital for the present invention so that their detailed structures are not described herein. The following description assumes that the permitted number of uses is set as for ten times.

The domain identification assignment unit 204 extracts the domain identifier M1303 from the license distribution request message body M1300, and determines the domain identifier to be assigned to a license (Step S1914). The domain identification assignment unit 204 may also extract the terminal identifier M1301, and inquire the domain information storage unit 111 whether the terminal apparatus 300 that has sent the license distribution request message to the unit 204 belongs to the domain corresponding to the domain identifier M1303.

Also, the domain identification assignment unit 204 may identify, according to the terminal identifier M1301, the domain identifier of the domain to which the terminal apparatus 300 that has sent the license distribution request message from the domain information storage unit 111 belongs. In this case, the domain identifier 1303 does not need to be set in the license distribution request message body M1300. In the case where the terminal apparatus 300 belongs to a plurality of domains, it is possible that the user selects one domain identifier, then the domain identifier is determined as a domain identifier to be assigned to the license, or a plurality of domain identifiers are determined as domain identifiers to be assigned to the license. If the plurality of domain identifiers are determined, the domain identifiers 903 in the license 900 serve as a domain identifier list.

Note that in the domain identification assignment unit 204, it is the domain identifier M1303 included in the license distribution request message body 1300 obtained from the terminal apparatus 300 that is used as a domain identifier to be assigned to a license in the above description. However, it may be a domain identifier corresponding to the details of a license instead. For example, since a predetermined domain identifier is associated with the user identifier D601 included in the usage rule management table D600 in the usage rule storage unit 212, the domain identification assignment unit 204 identifies, from the usage rule management table D600, a user identifier corresponding to the usage rule generated by the usage rule generation unit 203. Then, in the domain identification assignment unit 204, the domain identifier associated with the user identifier is used as a domain identifier to be assigned to the license. Moreover, in the case where a usage type such as home and office is set as a usage rule in the usage rule management table D600, it is possible to use a domain identifier corresponding to the usage type (home or office) as a domain identifier to be assigned to the license, as in the same manner as that described above for the user identifier.

Also note the terminal apparatus 300 generates the license distribution request message including the terminal identifier M1301, the content identifier M1302, and domain identifier M1303, and sends the message to the license distribution server 200 in the above description. However, it is also possible for the terminal apparatus 300 to send these identifiers to the license distribution server 200 at the different timings. For example, the terminal apparatus 300 may send the terminal identifier M1301 to the license distribution server 200 during establishing a SAC with the license distribution server 200, and then send the content identifier M1302 and the domain identifier M1303 to the license distribution server 200 after establishing the SAC.

After determining the domain identifier, the license generation unit 202 sets: the usage rule generated by the usage rule generation unit 203 as the usage rule 901; the previously obtained content key as the content key 902; and the domain identifier determined by the domain identification assignment unit 204 as the domain identifier 903, and then generates the license 900 (Step S1915). Next, the license generation unit 202 sets the license 900 as the license M1401 in the license transmission message body M1400, and sends the license to the terminal apparatus 300 via the communication unit 201 (Step 1916).

The terminal apparatus 300 receives the license transmission message body M1400 via the communication unit 301, and obtains the license M1401 (Step 1933).

The terminal apparatus 300 associates the obtained license M1401 with a content identifier that is the same as the content identifier M1302 in the license distribution request message, and stores the license into the license storage unit 312 (Step S1934). Note that in the case where the license 900 includes the content identifier, such association processing is not necessary.

If the terminal apparatus 300 receives from the license distribution server 200 a response message including a notice that the license generation is not permitted, then the terminal apparatus 300 presents to the user the reasons of why the generation is not permitted, which is included in the response message, and ends the processing (Step S1932).

The above has already described how the user gives the license distribution request instruction, and consequently the terminal apparatus 300 obtains the license from the license distribution server 200.

Next, processing related to license transfer and domain judgments is described below. As described above, the processing related to license transfer includes the license search processing and the license obtainment processing.

### (License Search Processing)

Now, the license search processing for searching for the license is described. In the license search processing, the terminal apparatus 300 that is searching for the license sends a license search processing request to other terminal apparatuses 300. More specifically, the searching terminal apparatus 300 broadcasts the license search processing request to the terminal apparatuses 300, and then the terminal apparatuses 300 that have received the license search processing request send responses indicating whether or not they hold the license being searched. It is not practical to establish a SAC with all communication partners because the searching terminal apparatus 300 broadcasts the license search processing request.

Note that the domain judgments in the license search processing do not necessarily have to be performed correctly, since the license search processing is aimed at identifying a terminal apparatus 300 holding the license which the searching terminal apparatus 300 attempts to obtain, and the license search processing is not related to the license transfer, so that unauthorized use such as falsification by the searching terminal apparatus 300 does not cause any damage.

Here, the domain judgments in the present embodiment are described.

In the present embodiment, the license is not permitted to be transferred between terminal apparatuses that belong to different domains, and is able to be used or transferred only between terminal apparatuses that belong to a domain in which the license is permitted to be used and transferred. Therefore, the following two domain judgments are required.

The first judgment is a domain judgment to judge whether or not a terminal apparatus sending a license processing request and a terminal apparatus receiving the request belong to the same domain. On the other hand, the second judgment is a domain judgment to judge whether or not the license is permitted to be used and transferred in the domain which the terminal apparatus sending the license processing request belongs to. The former is the domain judgment based on domain judgment information, while the latter is the domain judgment based on a domain identifier included in the license.

With reference to the drawings, it is described below how the terminal apparatus 300a sends the license search request to the terminal apparatus 300b and consequently receives a result of the search. The following description assumes that a domain key has been held as the domain judgment information.

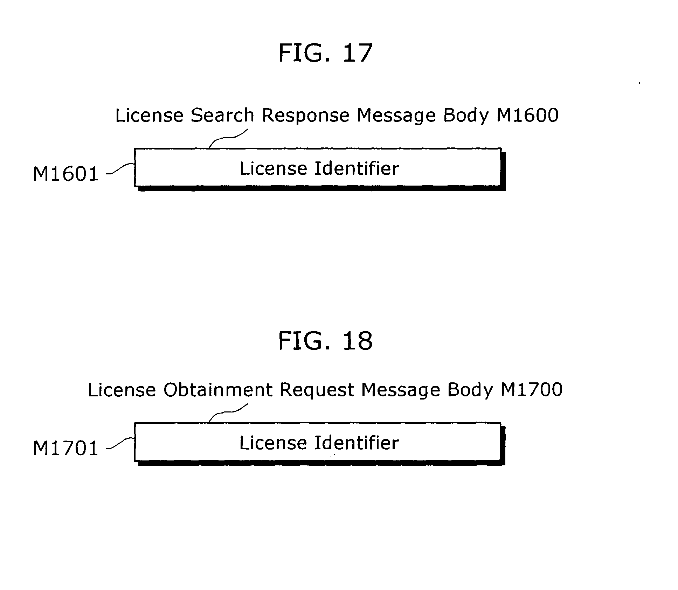

Referring now to FIGS. 16 and 17, the following describes data structures of communication messages related to the license search processing when the domain judgments are correctly performed, using the domain key. A license search request message body M1500 in FIG. 16 includes: a content identifier M1501 that is information necessary for the license search request; and a checksum M1502 of the content identifier M1501. A license search response message body M1600 in FIG. 17 includes a license identifier M1601.

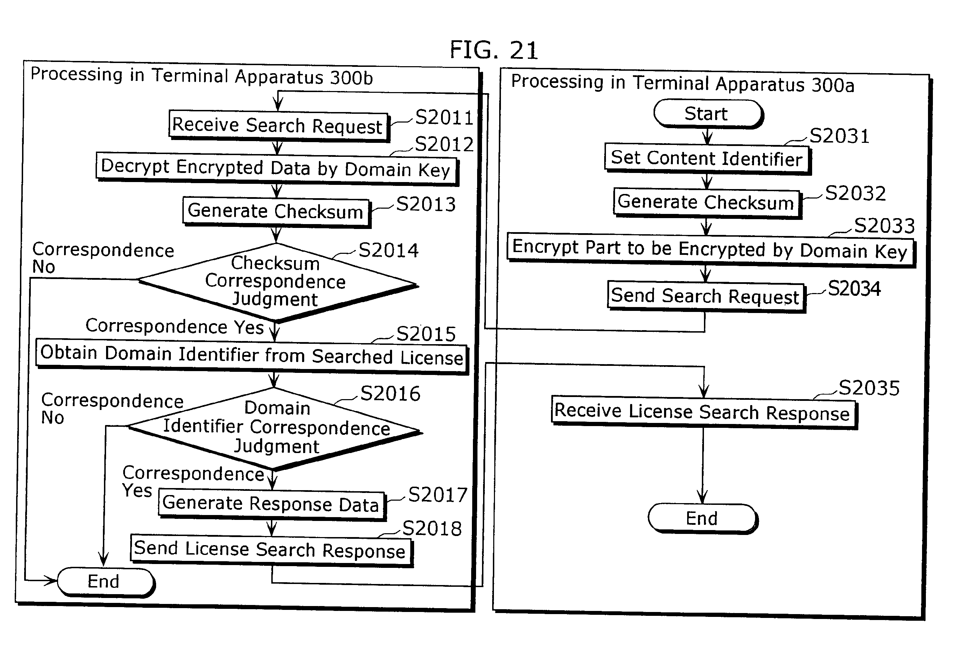

Referring now to FIG. 21, the following describes how, in the processing performed by each unit, the license search request is sent from the terminal apparatus 300a to the terminal apparatus 300b, the terminal apparatus 300b judges whether the terminal apparatus 300b belongs to the same domain as that of the terminal apparatus 300a, and consequently the terminal apparatus 300a receives a result indicating whether the terminal apparatus 300b holds the license being searched.

FIG. 21 is a flowchart showing the processing by which the terminal apparatus 300 in the embodiment of the present invention searches for the license in another terminal apparatus 300.

The terminal apparatus 300a starts the license search processing in response to the user's input of information into an application in the terminal apparatus 300a and an instruction to search for the license.

The user is required to input into the application in the terminal apparatus 300a at least: a content identifier that is one of information for identifying the license to be searched, or information equivalent to the content identifier; and a domain identifier that is one of information for identifying a domain which a terminal apparatus 300 holding the license to be searched belongs to, or information equivalent to the domain identifier, in the case where the terminal apparatus 300a belongs to a plurality of domains. Note that the application may automatically designate the domain identifier of the domain to which the terminal apparatus 300a belongs without the user's specific designation. Furthermore, in the case where the terminal apparatus 300a belongs to a plurality of domains, it is possible to perform the following processing for all domains to which the terminal apparatus 300a belongs.

The following description assumes that the user has already inputted a content identifier "CONTENT-ID-0001" and a domain identifier "DOMAIN-ID-0001", and started the license search processing.

In the license processing request unit 307, the terminal apparatus 300a that has received the information inputted from the user sets the content identifier "CONTENT-ID-0001" inputted by the user as the content identifier M1501 (Step S2031), and calculates the checksum M1502 of the content identifier M1501 (Step S2032).

The license processing request unit 307 obtains a domain key from the domain judgment information storage unit 311, using the domain identifier "DOMAIN-ID-0001" inputted by the user as a key, encrypts the content identifier M1501 and the checksum M1502 with the domain key (Step S2033), and creates a license search request message (the communication message M1000 including the license search request message body M1500 as the message body M1002).

The license processing request unit 307 sends the license search request message to the terminal apparatus 300b via the communication unit 301 (Step S2034).

The terminal apparatus 300b receives the license search request message via the communication unit 301 (Step S2011).

The domain judgment unit 303 in the terminal apparatus 300b obtains the domain key from the domain judgment information storage unit 311, decrypts an encrypted part of the license search request message (Step S2012), calculates a checksum of the content identifier M1501 (Step S2013), and judges whether the calculated checksum matches the checksum M1502 (Step S2014).

If the checksums match, then the domain judgment unit 303 determines that the terminal apparatus 300a belongs to the same domain, and performs the subsequent processing. If the checksums do not match, then the domain judgment unit 303 determines that the terminal apparatus 300a does not belong to the same domain, ends the processing, and sends to the terminal apparatus 300a a response message with a message body indicating that the terminal apparatus 300a does not belong to the same domain.

At this stage, the domain judgment unit 303 stores a domain identifier corresponding to the domain key for which the checksums match.

In the case where the terminal apparatus 300b belongs to a plurality of domains, there are a plurality of domain keys in the domain judgment information storage unit 311. In this case, the domain judgment unit 303 repeats Steps 2012 to 2014 in order, and judges whether or not the terminal apparatus 300a belongs to the same domains as that of the terminal apparatus 300. Alternatively, it is possible to avoid repeating the processing by setting in the license search request message the domain identifier of the domain to which the terminal apparatus 300a belongs.

The domain identification judgment unit 304 searches for a license in the license storage unit 312, obtains the license if the license storage unit 312 holds the searched license, using the content identifier M1501 extracted from the license search request message as a key, and performs the subsequent processing. If the license storage unit 312 does not hold the license being searched, then the domain identification judgment unit 304 ends the processing and sends to the terminal apparatus 300a via the communication unit 301 a response message with a message body indicating that the terminal apparatus 300b does not hold the license being searched.

The domain identification judgment unit 304 extracts the domain identifier 903 from the obtained license (Step S2015), and judges whether or not the domain identifier 903 matches the domain identifier that has been stored in the domain judgment unit 303 (Step S2016). If the domain identifiers match, then the domain identification judgment unit 304 determines that the transfer of the searched license is permitted within the domain to which the terminal apparatuses 300a and 300b belong. Then, the license processing result transmission unit 305 sets a license identifier that is the license identifier in the terminal apparatus 300b as the license identifier M1601 in the license search response message body M1600 (Step S2917), and sends the license identifier to the terminal apparatus 300a via the communication unit 301 (Step S2018).

If the domain identifiers do not match, then the domain identification judgment unit 304 determines that the searched license is not permitted to be transferred, ends the processing, and sends to the terminal apparatus 300a a response message with a message body indicating that the searched license is not permitted to be transferred.

Note that the domain identification judgment unit 304 sends the terminal apparatus 300a a response message including the details of the error if the checksums nor domain identifiers do not match in the domain judgments in the above description. However, the domain identification judgment unit 304 does not always need to send the response message.

Also note that the domain judgments is performed correctly using the domain key in the above description, but as mentioned above, the domain judgments in the license search processing do not necessarily have to be performed correctly. Therefore, it is possible to set the domain identifier instead of the checksum M1502 without the encryption with the domain key. In this case, instead of the decryption of the encrypted data, the generation of the checksum, and the correspondence judgment of the checksums (Steps S2012 to S2014), the domain identification judgment unit 304 judges whether a domain identifier corresponding to the domain key stored in the domain judgment information storage unit 311 and a domain identifier set in the license search request message match each other.

In the case where the terminal apparatus 300a belongs to a plurality of domains, the terminal apparatus 300a may send the details of the license search request message body M1500 in a list form, using a plurality of domain keys. In the case where the terminal apparatus 300a belongs to the plurality of domains and performs the domain judgments, using the domain identifiers, the terminal apparatus 300a may send a list of the domain identifiers. In both cases, the processing from Steps S2012 to S2014 is repeated.

The terminal apparatus 300a receives the license search response message (Step S2035), obtains from the message header information for identifying the terminal apparatus 300 that holds the searched license, obtains the license identifier M1601 from the license search response message body M1600, and stores the information (the terminal identifier) for identifying the terminal apparatus 300 and the license identifier M1601 together with the content identifier corresponding to the searched license.

In the case where an IP address of the terminal apparatus 300b would be changed, it is possible that the terminal apparatus 300b adds the terminal identifier to the license search response message body M1600, and that the terminal apparatus 300a obtains and stores the terminal identifier.

The above has already described how the terminal apparatus 300a sends the license search request to the terminal apparatus 300b, and consequently the terminal apparatus 300a identifies the terminal apparatus 300 that holds the license.

### (License Obtainment Processing)

Now, the license obtainment processing is described. In the license obtainment processing, the terminal apparatus 300 that attempts to obtain the license sends a license obtainment processing request to one of the terminal apparatuses 300. More specifically, after the search processing, the terminal apparatus 300 that attempts to obtain the license sends the license obtainment processing request to the identified terminal apparatuses 300, and the terminal apparatus 300 that has received the license obtainment processing request returns the license.

In the license obtainment processing, it is necessary to establish the SAC since the license should be securely managed to be transferred between the terminal apparatuses. It is also necessary to correctly perform the domain judgment in the license obtainment processing since the license transfer in the license obtainment processing is permitted only between terminal apparatuses that belong to the same domain.

With reference to the drawings, it is described more specifically below how the terminal apparatus 300a sends the license obtainment request to the terminal apparatus 300b, and consequently obtains the license.

Prior to describing the processing, referring to FIG. 18, a data structure of the communication message related to the license obtainment processing is described. A license obtainment request message body M1700 in FIG. 18 includes a license identifier M1701 that is information necessary for the license obtainment request.

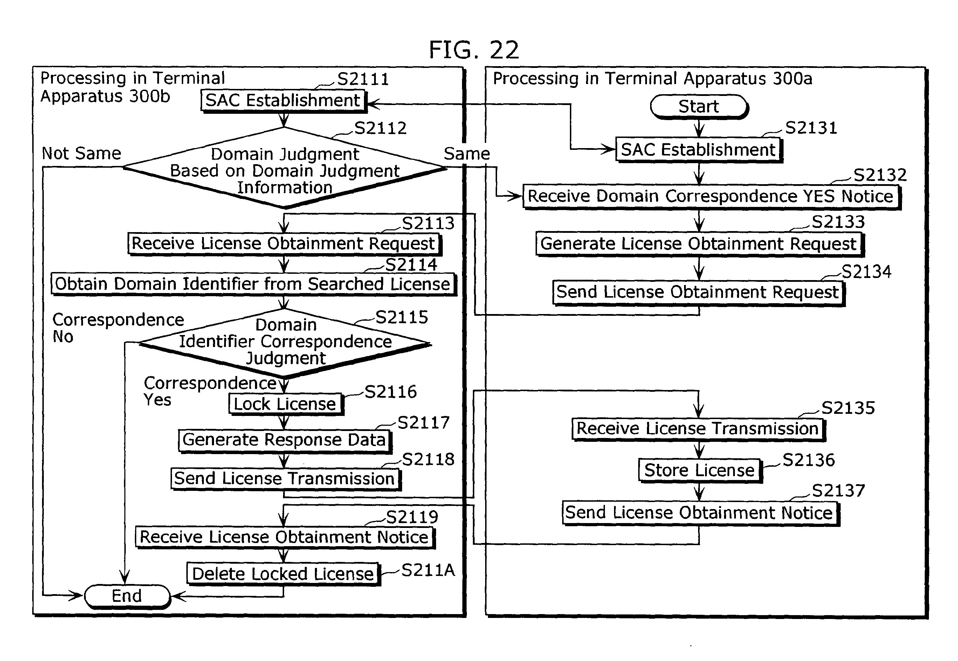

Referring now to FIG. 22, the following describes how, in the processing performed by each unit, the terminal apparatus 300a sends the license obtainment request to the terminal apparatus 300b, judges whether or not the terminal apparatus 300b belongs to the same domain as that of the terminal apparatus 300a, and consequently receives the license to be obtained. The following description assumes that a domain terminal apparatus list is held as domain judgment information.

FIG. 22 is a flowchart showing the processing by which the terminal apparatus 300 according to the embodiment of the present invention consequently obtains a license from another terminal apparatus 300.

The terminal apparatus 300a starts the license obtainment processing in response to the user's input of information into an application in the terminal apparatus 300a and an instruction to obtain a license.

The user is required to input, into the application in the terminal apparatus 300a, at least a content identifier that is one of the information for identifying the license to be obtained, or information equivalent to the content identifier. Note that it is possible to designate a license identifier of the obtained license which has been stored in the license search processing. The following description assumes that the user has already started the license obtainment processing by inputting a content identifier "CONTENT-ID-0001".

The license processing request unit 307 in the terminal apparatus 300a that has received the information inputted from the user searches, using the content identifier "CONTENT-ID-0001" as a key, for the information for identifying the terminal apparatus 300 holing the license being searched which has been stored in the license search processing, and obtains the information. This allows the terminal apparatus 300a to identify the terminal apparatus 300b as a partner with which the license obtainment processing is to be performed, and to start the license obtainment processing.

At the beginning, the terminal apparatuses 300a and 300b establish the SAC by performing communication (Steps S2111 and S2131). The following description assumes that the terminal apparatus 300a has sent a terminal identifier to the terminal apparatus 300b during establishing the SAC.

After that, the domain judgment unit 303 of the terminal apparatus 300b searches, in the domain terminal apparatus list stored in the domain judgment information storage unit 311, for the terminal identifier of the terminal apparatus 300a which has been obtained during establishing the SAC, and judges whether or not the terminal apparatus 300a belongs to the same domain (Step S2112).

If the terminal identifier of the terminal apparatus 300a exists in any of the domain terminal apparatus lists held in the terminal apparatus 300b, then the terminal apparatus 300b determines that the terminal apparatuses 300a and 300b belong to the same domain, and sends to the terminal apparatus 300a a domain correspondence notice message with a message body indicating that their domains are the same. Note that the message body may also include the domain identifier of the domain corresponding to the domain correspondence notice message. At this stage, the domain judgment unit 303 in the terminal apparatus 300b stores the domain identifier associated with the terminal identifier of the terminal apparatus 300a in the domain terminal apparatus list.

In the case where the terminal identifier of the terminal apparatus 300a exists in a plurality of the domain terminal apparatus lists, that is, the terminal apparatuses 300a and 300b belong to a plurality of the same domains, such domain identifier corresponding to the plurality of domains is set as a list form into the domain correspondence notice message, and then the terminal apparatus 300a or 300b may designate in which domain the license obtainment is to be performed.

If such a terminal identifier does not exist in any of the domain terminal apparatus list, then the terminal apparatus 300b determines that the terminal apparatuses 300a and 300b do not belong to the same domain, and sends to the terminal apparatus 300a a response message with a message body indicating that their domains are not the same.

When the terminal apparatus 300a receives the domain correspondence notice message (Step S2132), the license processing request unit 307 in the terminal apparatus 300a obtains a license identifier corresponding to the content identifier "CONTENT-ID-0001" inputted by the user, sets the license identifier as the license identifier M1701, and creates a license obtainment request message (the communication message M1000 including the license obtainment request message body M1700 as the message body M1002) (Step S2133).

The license processing request unit 307 sends the license obtainment request message to the terminal apparatus 300b via the communication unit 301 (Step S2134).

In the case where the terminal apparatuses 300a and 300b belong to the plurality of same domains, it is possible to set the domain identifier for designating from which domain the license is obtained, in the license obtainment request message when obtaining the license.

After Step S2134, the terminal apparatus 300b receives the license obtainment request message via the communication unit 301 (Step S2113).

The domain identification judgment unit 304 in the terminal apparatus 300b searches the license storage unit 312 for the license identifier M1701 extracted from the license obtainment request message. If the license identifier M1701 exists, then the domain identification judgment unit 304 obtains the license corresponding to the license identifier M1701, and performs the subsequent processing. If such a license identifier M1701 does not exist, then the domain identification judgment unit 304 ends the processing and sends to the terminal apparatus 300a a response message with a message body indicating that the terminal apparatus 300b does not hold the license being searched.

The domain identification judgment unit 304 extracts the domain identifier 903 from the obtained license (Step S2114), and judges whether or not the domain identifier 903 corresponds to the domain identifier stored in the domain judgment unit 303 (Step S2115).

If these domain identifiers correspond to each other, then the domain identification judgment unit 304 locks the searched license stored in the license storage unit 312 to be make it temporarily unusable (Step S2116). The license processing result transmission unit 305 sets the obtained license as the license M1401 in the license transmission message body M1400 (Step S2117), and sends the license to the terminal apparatus 300a via the communication unit 301 (Step S2118).

The terminal apparatus 300a receives the license transmission message (Step S2135), and stores the license M1401 extracted from the license transmission message into the license storage unit 312 in association with the content identifier "CONTENT-ID-0001" (Step S2136).

After obtaining the license, the terminal apparatus 300a sends to the terminal apparatus 300b via the communication unit 301 a license obtainment notice message with a message body indicating that the license has been stored (Step S2137).

The terminal apparatus 300b receives the license obtainment notice message (Step S2119), and deletes the locked license in the license storage unit 312 (Step S211A).

If the terminal apparatus 300b does not receive the license obtainment notice message within a predetermined time period after the license transmission message is sent or if it receives a notice of the failure to obtain or store the license, the terminal apparatus 300b may make the locked license usable.

Note that in the case where the domain judgment information is the domain terminal apparatus list, the terminal apparatus 300b judges, based on the terminal identifier and the domain terminal apparatus list that have been exchanged during establishing the SAC, whether or not the terminal apparatuses 300a and 300b belong to the same domain in the above description.

However, in the case where the domain judgment information is the domain key, it is possible that the terminal apparatus 300a sends the domain key to the terminal apparatus 300b during establishing the SAC, and the terminal apparatus 300b performs the domain judgment based on whether or not the terminal apparatus 300b holds the same domain key.

It is also possible that the terminal apparatus 300a sends the domain identifier to the terminal apparatus 300b during establishing the SAC, and that the terminal apparatus 300b performs the domain judgment based on whether or not the terminal apparatus 300b holds the domain judgment information of the domain identifier.

Furthermore, the terminal apparatus 300a may perform such domain judgment using the terminal identifier, domain key and domain identifier not only when establishing the SAC but also when sending and receiving the license obtainment request message after establishing the SAC, or may perform such domain judgment without establishing the SAC.

In the case where the terminal apparatus 300a belongs to a plurality of domains, the terminal apparatus 300a may send a plurality of domain identifiers in a list form. In this case, the terminal apparatus 300b performs domain judgment for each domain identifier.

Also, in the case where the domain judgment determines that the terminal apparatuses 300a and 300b belong to a plurality of the same domains, the terminal apparatus 300a or 300b may designate in which domain the license is transferred. Note that the same is applicable to the case where the data sent from the terminal apparatus 300a to the terminal apparatus 300b is the domain key.

Also note that it is the license distribution server 200 that sets the domain identifier in the license in the above description, but it may be the terminal apparatus 300 that sets the domain identifier in the license. In this case, the license distribution server 200 may set information for restricting the number of updating the domain identifier in the license. By such processing, the range in which the license can be transferred is controlled without reducing the convenience of the user.

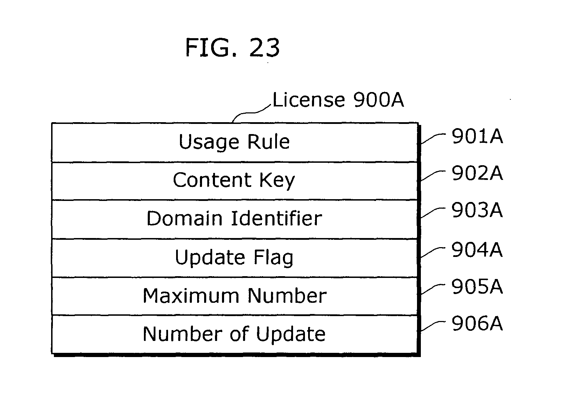

FIG. 23 is a diagram showing data structure of the license in which the domain identifier is able to be updated.

A license 900A includes a usage rule 901A, a content key 902A, and a domain identifier 903A as in the case of the license 900 shown in FIG. 10, and further includes an update flag 904A indicating whether or not the domain identifier 903A is able to be updated, a maximum number of updates 905A, and a number of updates 906A indicating the number of times for which the domain identifier 903A has been updated.

For example, in the case where (i) the update flag 904A indicates that the domain identifier 903A is able to be updated, (ii) the maximum number 905A is "for ten times", and (iii) the number of updates 906A is "for four times", the terminal apparatus 300 determines, based on the update flag 904A, that the domain identifier 903A in the license 900A is able to be updated. Also, the terminal apparatus 300 determines, based on the maximum number 905A and the number of updates 906A, that the domain identifier 903A is able to be updated for 6 times (10 times - 4 times).

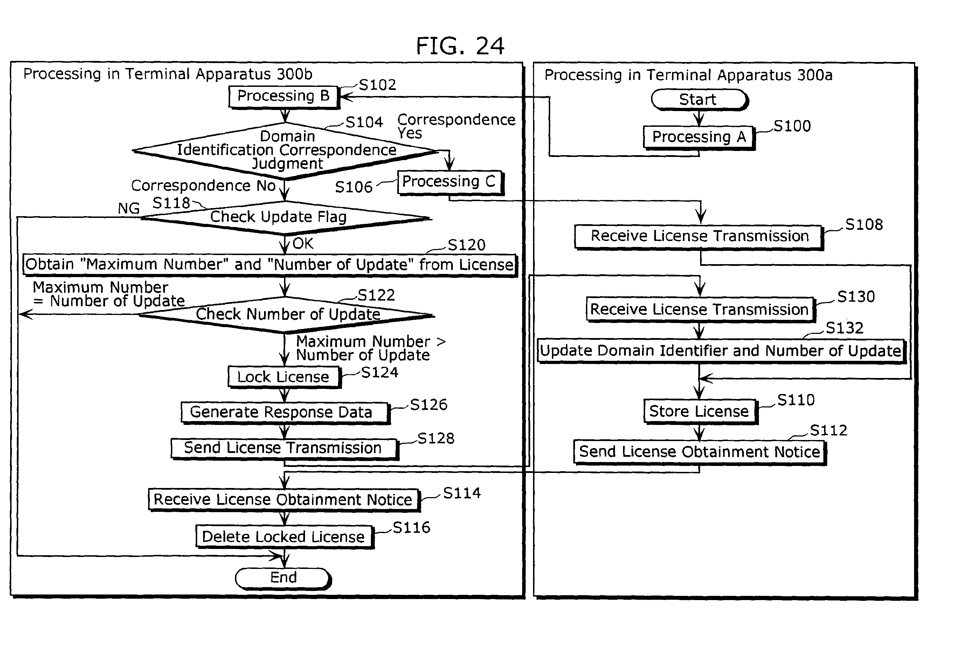

FIG. 24 is a flowchart showing processing by which the terminal apparatus 300 according to the embodiment of the present invention consequently obtains the license 900A from another terminal apparatus 300.

Firstly, the terminal apparatus 300a performs processing A that is the same as Steps S2131 to S2134 in FIG. 22 (Step S100), and the terminal apparatus 300b performs processing B that is the same as Steps S2111 to S2114 in FIG. 22 (Step S102).

Next, the terminal apparatus 300b, as in the case of Step S2115 in FIG. 22, judges whether or not the domain identifier 903A in the license 900A obtained from the terminal apparatus 300a corresponds to the domain identifier of the domain to which the terminal apparatus 300a belongs (Step S104).

If the terminal apparatus 300b determines that the domain identifiers are the same (Correspondence Yes in Step S104), then the terminal apparatuses 300a and 300b perform the same processing as shown in FIG. 22. That is, the terminal apparatus 300b performs processing C that is the same as Steps S2116 to S2118 in FIG. 22 (Step S106), and the terminal apparatus 300a receives the license transmission message sent in the processing C (Step S108). Then, the terminal apparatus 300a stores the license 900A extracted from the message into the license storage unit 312 (Step S110), and sends a license obtainment notice message to the terminal apparatus 300b (Step S112). The terminal apparatus 300b receives the license obtainment notice message from the terminal apparatus 300a (Step S114), and deletes the license 900A locked in the processing C in Step S106 (Step S116).

On the other hand, if the terminal apparatus 300b determines that the domain identifiers are not the same (Correspondence No in Step S104), then the terminal apparatus 300b further checks the update flag 904A in the license 900A (Step S118). At this stage, if the update flag 904A indicates that domain identifier 903A is able to be updated (OK in Step S118), then the terminal apparatus 300b obtains the maximum number 905A and the number of updates 906A from the license 900A (Step S120). If the update flag 904A indicates that the domain identifier 903A is not able to be updated (NG in Step S118), then the terminal apparatus 300b ends the processing.

After obtaining the maximum number 905A and the number of updates 906A in Step S120, the terminal apparatus 300b checks the number of updates 906A (Step S122). That is, the terminal apparatus 300b judges whether the number of updates 906A equals to or is smaller than the maximum number 905A. If the number of updates 906A equals to the maximum number 905A, then the terminal apparatus 300b ends the processing. If the number of updates 906A is smaller than the maximum number 905A, then the terminal apparatus 300b locks the license to make it temporarily usable as in the case of Steps S2116 to S2118 in FIG. 22 (Step S124), generates the license transmission message including the license 900A (Step S126), and sends to the terminal apparatus 300a the license transmission message together with an instruction to update the domain (Step S128).

The terminal apparatus 300a receives the license transmission message and the instruction to update the domain sent from the terminal apparatus 300b in Step S128 (Step S130), and then updates the domain identifier 903A and the number of updates 906A in the license 900A included in the license transmission message (Step S132). That is, the terminal apparatus 300a updates the domain identifier 903A to a domain identifier of the domain to which the terminal apparatus 300a belongs, and updates the number of updates 906A so that the number of updates is increased by one. After that, the terminal apparatus 300a performs Steps S110 and S112, and the terminal apparatus 300b performs Steps S114 and S116. Note that the terminal apparatus 300b sends to the terminal apparatus 300a the instruction to update the domain in the above description, but it should be appreciated that the instruction is not necessarily sent. That is, the terminal apparatus 300a judges whether or not the domain identifier 903A in the license 900A obtained from the terminal apparatus 300b corresponds to the domain identifier of the domain to which the terminal apparatus 300a belongs. If the terminal apparatus 300a determines that the domain identifiers are not the same, then the terminal apparatus 300a updates the domain identifier 903A. Alternatively, the terminal apparatus 300a may update the domain identifier 903A in the license 900A obtained from the terminal apparatus 300b regardless of the existence of the instruction to update the domain.

The above processing allows the terminal apparatus 300a to update the domain identifier 903A and use the license 900A, even if the domain identifier 903A in the license 900A is different from the domain identifier of the domain to which the terminal apparatus 300a belongs. Also, if the number of updates 906A reaches the maximum number 905A, the license 900A is not sent to terminal apparatuses belonging to the domains whose domain identifiers are different from the domain identifier 903A, which restricts unauthorized distribution of the license 900A.

Note that when updating the domain identifier 903A, the terminal apparatus 300a updates the number of updates 906A so that the number of updates is increased by one in the above description. However, the terminal apparatus 300a may update the number of updates 906A so that the number of updates is decreased by one. In this case, since initial value of the number of updates 906A is set to the same number of the maximum number 905A, the domain identifier 903A is not able to be updated when the number of updates 906A reaches zero.

Also note that it is the terminal apparatus 300a having obtained the license 900A that updates the domain identifier 903A and the number of updates 906A in the license 900A in the above description. However, it may be the terminal apparatus 300b sending the license 900A that updates them.

Further note that the update flag 904A is not updated in the above description, but the terminal apparatus 300a or 300b may update the update flag 904A when the number of updates 906A reaches the maximum number 905A. That is, the terminal apparatus updates the update flag 904A so that the update flag 904A indicates no more updated of 903A is not permitted. This allows the terminal apparatus 300a or 300b to judge whether or not the domain identifier 903A is able to updated, only by checking the update flag 904A without comparing the number of updates 906A with the maximum number 905A.

Still further note that the domain judgment based on the domain identifier is performed after the domain judgment based on the domain judgment information in the above description. However, it should be appreciated that the two domain judgments are not necessarily performed in this order.

For example, in the case where the domain judgment based on the domain judgment information is not performed during the establishment of the SAC and the license obtainment request message including the domain identifier is sent, the terminal apparatus 300b can perform the domain judgment based on the domain judgment information after the domain judgment based on the domain identifier.

The above has already described how the terminal apparatus 300a sends the license obtainment request to the terminal apparatus 300b, and consequently receives the license.

Note that one domain identifier is set in the license in the description, but a plurality of domain identifiers may be set.

Also note that the information for identifying the domain is a domain identifier in the above description, but the information is a user identifier in the case where the domain is set for each user, and the information is a home identifier in the case where the domain is set for each home.

Further note that the domain identifier is set in a data format in the license in the above description. However, it is possible that the license distribution server 200 distributes the domain identifier in association with the license, and that the terminal apparatus 300 manages the license for each domain identifier. In this case, the data format in the license may not include the domain identifier.

The above has already described the processing in the license distribution system S by which the terminal apparatus 300 consequently transfers the license between the terminal apparatuses belonging to the same domain to which the terminal apparatus 300 belongs.

Note that the present embodiment has described that if the terminal apparatus 300b judges whether or not the terminal apparatus 300a is permitted to use the license, and determines that the terminal apparatus 300a is not permitted to use the license, then the terminal apparatus 300b does not send the license to the terminal apparatus 300a in order to prohibit the terminal apparatus 300a from using the license. However, it is also possible that the terminal apparatus 300b sends the license to the terminal apparatus 300a without performing the judgment, and the terminal apparatus 300a judges whether or not the terminal apparatus 300a is permitted to use the license. In this case, the terminal apparatus 300b sends the license including the domain identifier to the terminal apparatus 300a, and then the terminal apparatus 300a judges whether or not the domain identifier of the domain to which the terminal apparatus 300a belongs corresponds to the domain identifier included in the license. If the domain identifiers are not the same, then the terminal apparatus 300a is not permitted to use the license. It is also possible that the terminal apparatus 300a stores the fact that the license is obtained from the terminal apparatus 300b, and if the domain identifier of the domain to which the terminal apparatus 300a belongs and the domain identifier included in the license are not the same, the terminal apparatus 300a returns the license to the terminal apparatus 300b.

Also note that the above has described that the terminal apparatus 300b prohibits other terminal apparatuses from using the license by not sending them the license or by making them judge the availability of the license use. Besides prohibiting other terminal apparatuses from using the license, however, the terminal apparatus 300b may prohibit itself from using the license, if the terminal apparatus 300b judges whether or not the domain identifier of the domain to which the terminal apparatus 300b belongs corresponds to the domain identifier included in the license, and determines that the domain identifiers are not the same, which reliably restrict the license use.

### Industrial Applicability

The terminal apparatus, the server apparatus, and the license distribution system having these apparatuses according to the present invention are capable of properly restricting each terminal apparatus to use a license, and are suited for use as terminal apparatuses, server apparatuses, and license distribution systems having these apparatuses for performing, using the license, reproduction, recording, and the like of a content which is a digital copyrighted work.

## Claims

1. A terminal apparatus in a system having a plurality of domains, each of which is a group of terminal apparatuses, said terminal apparatus comprising:
a license information storage unit operable to store license information in association with domain identification information indicating one of the plurality of domains, the license information permitting use of a content which is a digital copyrighted work; and
a usage prohibition unit operable to prohibit another terminal apparatus from using the license information in the case where a domain to which the another terminal apparatus belongs is different from a domain which is indicated in the domain identification information.

2. The terminal apparatus according to Claim 1,
wherein said usage prohibition unit includes:
a first domain judgment unit operable to judge whether or not the domain to which the another apparatus belongs is different from the domain which is indicated in the domain identification information; and
a transmission prohibition unit operable to prohibit transmission of the license information to the another terminal apparatus in the case where said first domain judgment unit judges that the domains are different.

3. The terminal apparatus according to Claim 2, further comprising:
a license request unit operable to request an apparatus for the license information, the apparatus being connected to said terminal apparatus via a communication line; and
a license obtainment unit operable to obtain, from the apparatus, the license information and the domain identification information in response to the request from said license request unit,
wherein said license information storage unit is operable to store the license information in association with the domain identification information, the license information being obtained by said license obtainment unit.

4. The terminal apparatus according to Claim 3, further comprising:
a second domain judgment unit operable to judge whether or not the domain to which the terminal apparatus belongs is different from the domain which is indicated in the domain identification information; and
a self usage prohibition unit operable to prohibit said terminal apparatus from using the content based on the license information, in the case where said second domain judgment unit judges that the domains are different.

5. The terminal apparatus according to Claim 4, further comprising
a judgment information storage unit operable to store domain judgment information for identifying the domain to which the another terminal apparatus belongs,
wherein said first domain judgment unit is operable to identify the domain to which the another terminal apparatus belongs, based on the domain judgment information stored in said judgment information storage unit, and to judge whether or not the identified domain is different form the domain indicated in the domain identification information.

6. The terminal apparatus according to Claim 5,
wherein said judgment information storage unit is operable to store a domain terminal list as the domain judgment information, the domain terminal list indicating a correspondence between each domain and a terminal apparatus belonging to the each domain, and
said first domain judgment unit is operable to identify, based on the domain terminal list, the domain to which the another terminal apparatus belongs, and to judge whether or not the identified domain is different from the domain indicated in the domain identification information.

7. The terminal apparatus according to Claim 5,
wherein said judgment information storage unit is operable to store a domain key as the domain judgment information, the domain key being a common key for each domain and corresponding to the domain to which the terminal apparatus belongs, and
said first domain judgment unit includes:
a decryption possibility judgment unit operable to judge whether or not it is possible to decrypt data encrypted with the domain key of the another terminal apparatus, using the domain key stored in said domain information storage unit; and
a specification unit operable to specify, as the domain to which the another domain belongs, a domain corresponding to the domain key used in the decryption, in the case where said decryption possibility judgment unit judges that it is possible to decrypt the data,
wherein said first domain judgment unit is operable to judge whether or not the domain specified by said specification unit is different from the domain indicated in the domain identification information.

8. The terminal apparatus according to Claim 2, further comprising
an update unit operable to update the domain identification information so that the domain indicated in the domain identification information is changed.

9. The terminal apparatus according to Claim 1, further comprising:
a license request unit operable to request an apparatus for the license information, the apparatus being connected to the terminal apparatus via a communication line; and
a license obtainment unit operable to obtain, from the apparatus, the license information and the domain identification information in response to the request from said license request unit,
wherein said license information storage unit is operable to store the license information in association with the domain identification information, the license information being obtained by said license obtainment unit.

10. The terminal apparatus according to Claim 1,
wherein said usage prohibition unit is operable to cause the another terminal apparatus to judge whether or not the domain to which the another terminal apparatus belongs is different from the domain which is indicated in the domain identification information, by sending the license information and the domain identification information to the another terminal apparatus, and to prohibit the another terminal apparatus from using the license information in the case where the domains are different.

11. A server apparatus in a system having a plurality of domains, each of which is a group of terminal apparatuses, said server apparatus comprising:
a license information generation unit operable to generate license information for permitting use of a content which is a digital copyrighted work;
an adding unit operable to add domain identification information to the license information generated by said license information generation unit, the domain identification information indicating one of the plurality of domains; and
a distribution unit operable to distribute, to a terminal apparatus belonging to a domain indicated in the domain identification information, the license information to which the domain identification information is added.

12. The server apparatus according to Claim 11, further comprising
a request acceptance unit operable to accept a request for distribution of the license information from a terminal apparatus,
wherein said license information generation unit is operable to generate the license information that is indicated in the request accepted by said request acceptance unit, and
said adding unit is operable to add domain identification information to the license information generated by said license information generation unit, the domain identification information indicating a domain to which the terminal apparatus that makes the request for the distribution of the license information belongs.

13. The server apparatus according to Claim 12, further comprising
a domain information storage unit operable to previously store domain information indicating a domain identifier for identifying each domain, in association with a terminal apparatus belonging to each domain,
wherein said adding unit is operable to identify, based on the domain information, the domain identifier associated with the terminal apparatus that makes the request for the distribution of the license information, and to add, as the domain identification information, the identified domain identifier to the license information.

14. The server apparatus according to Claim 11,
wherein said adding unit is operable to add domain identification information to the license information, the domain identification information indicating the plurality of domains, and
said distribution unit is operable to distribute, to a terminal apparatus that belongs to at least one of the domains which are indicated in the domain identification information, the license information to which the domain identification information is added.

15. The server apparatus according to Claim 11, further comprising
a restriction information generation unit operable to generate restriction information for restricting a number of updates in the domain identification information distributed by said distribution unit, the updates being performed so that the domain indicated in the domain identification information is changed,
wherein said adding unit is operable to further add the restriction information generated by said restriction information generation unit to the license information generated by said license information generation unit, and
said distribution unit is operable to distribute the license information to which the domain identification information and the restriction information are added.

16. A license distribution system comprising a server apparatus and a plurality of domains, each of which is a group of terminal apparatuses, said license distribution system distributing, between said server apparatus and each of said terminal apparatuses, license information permitting use of a content which is a digital copyrighted work,
wherein said server apparatus includes:
a request acceptance unit operable to accept a request for the distribution of the license information from said each terminal apparatus;
a license information generation unit operable to generate the license information that is indicated in the request accepted by said request acceptance unit;
an adding unit operable to add domain identification information to the license information generated by said license information generation unit, the domain identification information indicating the domain to which said terminal apparatus that makes the request for the distribution of the license information belongs; and
a distribution unit operable to distribute, to said terminal apparatus that makes the request for the distribution of the license information, the license information to which the domain identification information is added, and
said terminal apparatus includes:
a license request unit operable to request said request acceptance unit in said server apparatus for the license information;
a license obtainment unit operable to obtain, from said server apparatus, the license information and the domain identification information in response to the request from said license request unit;
a license information storage unit operable to store the license information obtained by said license obtainment unit in association with the domain identification information obtained by said license obtainment unit; and
a usage prohibition unit operable to prohibit another terminal apparatus from using the license information in the case where a domain to which the another apparatus belongs is different from a domain which is indicated in the domain identification information.

17. A license information management method by which a terminal apparatus in a system having a plurality of domains, each of which is a group of terminal apparatuses, manages license information permitting use of a content which is a digital copyrighted work, said method comprising:
obtaining, from an apparatus connected to the terminal apparatus via a communication line, the license information and domain identification information that indicates one of the plurality of domains; and
prohibiting another terminal apparatus from using the license information in the case where a domain to which the another apparatus belongs is different from a domain which is indicated in the domain identification information.

18. A license information distribution method by which a server apparatus in a system having a plurality of domains, each of which is a group of terminal apparatuses, distributes license information permitting use of a content which is a digital copyrighted work, said method comprising:
generating the license information;
adding domain identification information to the license information generated by said generating, the domain identification information indicating one of the plurality of domains; and
distributing, to a terminal apparatus belonging to a domain which is indicated in the domain identification information, the license information to which the domain identification information is added.

19. A program used by a terminal apparatus in a system having a plurality of domains, each of which is a group of terminal apparatuses, said terminal apparatus managing license information permitting use of a content which is a digital copyrighted work, said program causing a computer to execute:
obtaining, from the apparatus connected to the terminal apparatus via a communication line, the license information and domain identification information that indicates one of the plurality of domains; and
prohibiting another terminal apparatus from using the license information in the case where a domain to which the another apparatus belongs is different from a domain which is indicated in the domain identification information.
